# EUROPEAN PATENT SPECIFICATION

(11) **EP 3 123 704 B1**
(45) Date of publication and mention of the grant of the patent: **24.04.2019**
(21) Application number: 14887380.5
(22) Date of filing: 27.03.2014
(51) Int. Cl.: H04M 1/725

(54) **CAUSATION OF DISABLEMENT OF AN ALARM EVENT**
AUSLÖSUNG DER DEAKTIVIERUNG EINES ALARMEREIGNISSES
CAUSALITÉ DE DÉSACTIVATION D'UN ÉVÉNEMENT D'ALARME

(43) Date of publication of application: 01.02.2017
(73) Proprietor: Nokia Technologies Oy, 02610 Espoo (FI)
(72) Inventor: ANWAR, Adel Ebrahim, Beijing 100022 (CN); YUAN, Shijun, Beijing 100040 (CN)
(74) Representative: Potter Clarkson
(86) International application number: PCT/CN2014/074218
(87) International publication number: WO 2015/143675

(56) References cited:
- CN-A- 101 488 995
- CN-A- 103 501 389
- CN-A- 103 533 167
- CN-A- 103 685 736
- US-A1- 2006 208 861
- US-A1- 2010 180 001

## Description

### TECHNICAL FIELD

The technical field relates generally to causation of disablement of an alarm event.

### BACKGROUND

Over the years, electronic apparatuses have become increasingly prevalent in our society. As a result, many users of electronic apparatuses have become increasingly reliant upon their electronic apparatuses for purposes relating to communication, scheduling, etc. As such, it may be desirable to configure an electronic apparatus such that a user of the electronic apparatus may interact with the electronic apparatus in an intuitive manner.

US 2006/0208861 discloses techniques and tools for providing actionable communication reminders. For example, an item representing an original communication is displayed and a command to set up a reminder to respond to the original communication is accepted. The reminder is set up and, at a later time, is displayed. An input mechanism that can be actuated to respond to the communication may be provided at the later time. As another example, a suggested time to display the reminder and suggested contact information for responding to the original communication are displayed while setting up a reminder. US 2010/0180001 discloses a system for providing contextual information to the user through a messaging panel or alternate display which provides system and social contextual information related to activities undertaken by the user.

### SUMMARY

The invention is defined in the independent claims. Preferred features are set out in the dependent claims.

One or more example embodiments further perform initiation of an unlocked interaction mode based, at least in part, on the unlocked interaction mode initiation input.

One or more example embodiments further perform initiation of an unlocked interaction mode based, at least in part, on the termination of the locked interaction mode.

One or more of the embodiments and/or claims described herein may be suitably combined in any manner apparent to one of ordinary skill in the art.

### BRIEF DESCRIPTION OF THE DRAWINGS

For a more complete understanding of embodiments of the invention, reference is now made to the following descriptions taken in connection with the accompanying drawings in which:
FIGURE 1 is a block diagram showing an apparatus according to at least one example embodiment;
FIGURES 2A-2B are diagrams illustrating alarm notifications according to at least one example embodiment;
FIGURE 3 is a diagram illustrating enablement and/or disablement of an alarm event according to at least one example embodiment;
FIGURES 4A-4C are diagrams illustrating pre-alarm notifications according to at least one example embodiment;
FIGURE 5 is a diagram illustrating enablement and/or disablement of an alarm event according to at least one example embodiment;
FIGURE 6 is a flow diagram illustrating activities associated with causation of disablement of an alarm event according to at least one example embodiment;
FIGURE 7 is a flow diagram illustrating activities associated with causation of disablement of a next occurrence of a recurring alarm event according to at least one example embodiment;
FIGURE 8 is a flow diagram illustrating activities associated with causation of disablement of a next occurrence of a recurring alarm event according to at least one example embodiment;
FIGURE 9 is a flow diagram illustrating activities associated with causation of disablement of an alarm event according to at least one example embodiment; and
FIGURE 10 is a flow diagram illustrating activities associated with initiation and/or termination of a locked interaction mode according to at least one example embodiment.

### DETAILED DESCRIPTION OF THE DRAWINGS

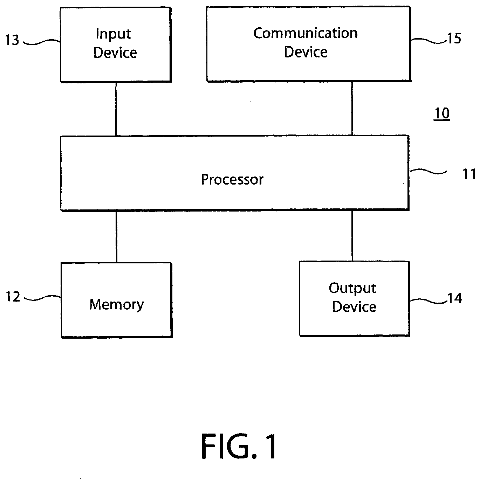

An embodiment of the invention and its potential advantages are understood by referring to FIGURES 1 through 10 of the drawings.

Some embodiments will now be described more fully hereinafter with reference to the accompanying drawings, in which some, but not all, embodiments are shown. Various embodiments of the invention may be embodied in many different forms and should not be construed as limited to the embodiments set forth herein; rather, these embodiments are provided so that this disclosure will satisfy applicable legal requirements. Like reference numerals refer to like elements throughout. As used herein, the terms "data," "content," "information," and similar terms may be used interchangeably to refer to data capable of being transmitted, received and/or stored in accordance with embodiments of the present invention. Thus, use of any such terms should not be taken to limit the scope of embodiments of the present invention.

Additionally, as used herein, the term 'circuitry' refers to (a) hardware-only circuit implementations (e.g., implementations in analog circuitry and/or digital circuitry); (b) combinations of circuits and computer program product(s) comprising software and/or firmware instructions stored on one or more computer readable memories that work together to cause an apparatus to perform one or more functions described herein; and (c) circuits, such as, for example, a microprocessor(s) or a portion of a microprocessor(s), that require software or firmware for operation even if the software or firmware is not physically present. This definition of 'circuitry' applies to all uses of this term herein, including in any claims. As a further example, as used herein, the term 'circuitry' also includes an implementation comprising one or more processors and/or portion(s) thereof and accompanying software and/or firmware. As another example, the term 'circuitry' as used herein also includes, for example, a baseband integrated circuit or applications processor integrated circuit for a mobile phone or a similar integrated circuit in a server, a cellular network apparatus, other network apparatus, and/or other computing apparatus.

As defined herein, a "non-transitory computer-readable medium," which refers to a physical medium (e.g., volatile or non-volatile memory device), can be differentiated from a "transitory computer-readable medium," which refers to an electromagnetic signal.

FIGURE 1 is a block diagram showing an apparatus, such as an electronic apparatus 10, according to at least one example embodiment. It should be understood, however, that an electronic apparatus as illustrated and hereinafter described is merely illustrative of an electronic apparatus that could benefit from embodiments of the invention and, therefore, should not be taken to limit the scope of the invention. While electronic apparatus 10 is illustrated and will be hereinafter described for purposes of example, other types of electronic apparatuses may readily employ embodiments of the invention. Electronic apparatus 10 may be a personal digital assistant (PDAs), a pager, a mobile computer, a desktop computer, a television, a gaming apparatus, a laptop computer, a tablet computer, a media player, a camera, a video recorder, a mobile phone, a global positioning system (GPS) apparatus, an automobile, a kiosk, an electronic table, and/or any other types of electronic systems. Moreover, the apparatus of at least one example embodiment need not be the entire electronic apparatus, but may be a component or group of components of the electronic apparatus in other example embodiments. For example, the apparatus may be an integrated circuit, a set of integrated circuits, and/or the like. The apparatus may, in some embodiments, comprise a distributed system of apparatus, in which each apparatus forming part of the system provides one or more features which collectively implement an embodiment of the invention. In one or more example embodiments, an apparatus is re-configured by an entity other than its initial manufacturer to implement an embodiment of the invention by being provided with additional software which, when executed, causes the apparatus to implement the invention, either individually or as part of a system of apparatus as mentioned herein. Furthermore, apparatuses may readily employ embodiments of the invention regardless of their intent to provide mobility. In this regard, even though embodiments of the invention may be described in conjunction with mobile applications, it should be understood that embodiments of the invention may be utilized in conjunction with a variety of other applications, both in the mobile communications industries and outside of the mobile communications industries. For example, the apparatus may be, at least part of, a non-carryable apparatus, such as a large screen television, an electronic table, a kiosk, an automobile, and/or the like.

In the example of FIGURE 1, electronic apparatus 10 comprises processor 11 and memory 12. Processor 11 may be any type of processor, controller, embedded controller, processor core, and/or the like. In at least one example embodiment, processor 11 utilizes computer program code to cause an apparatus to perform one or more actions. Memory 12 may comprise volatile memory, such as volatile Random Access Memory (RAM) including a cache area for the temporary storage of data and/or other memory, for example, non-volatile memory, which may be embedded and/or may be removable. The non-volatile memory may comprise an EEPROM, flash memory and/or the like. Memory 12 may store any of a number of pieces of information, and data. The information and data may be used by the electronic apparatus 10 to implement one or more functions of the electronic apparatus 10, such as the functions described herein. In at least one example embodiment, memory 12 includes computer program code such that the memory and the computer program code are configured to, working with the processor, cause the apparatus to perform one or more actions described herein.

The electronic apparatus 10 may further comprise a communication device 15. In at least one example embodiment, communication device 15 comprises an antenna, (or multiple antennae), a wired connector, and/or the like in operable communication with a transmitter and/or a receiver. In at least one example embodiment, processor 11 provides signals to a transmitter and/or receives signals from a receiver. The signals may comprise signaling information in accordance with a communications interface standard, user speech, received data, user generated data, and/or the like. Communication device 15 may operate with one or more air interface standards, communication protocols, modulation types, and access types. By way of illustration, the electronic communication device 15 may operate in accordance with second-generation (2G) wireless communication protocols IS-136 (time division multiple access (TDMA)), Global System for Mobile communications (GSM), and IS-95 (code division multiple access (CDMA)), with third-generation (3G) wireless communication protocols, such as Universal Mobile Telecommunications System (UMTS), CDMA2000, wideband CDMA (WCDMA) and time division-synchronous CDMA (TD-SCDMA), and/or with fourth-generation (4G) wireless communication protocols, wireless networking protocols, such as 802.11, short-range wireless protocols, such as Bluetooth, and/or the like. Communication device 15 may operate in accordance with wireline protocols, such as Ethernet, digital subscriber line (DSL), asynchronous transfer mode (ATM), and/or the like.

Processor 11 may comprise means, such as circuitry, for implementing audio, video, communication, navigation, logic functions, and/or the like, as well as for implementing embodiments of the invention including, for example, one or more of the functions described herein. For example, processor 11 may comprise means, such as a digital signal processor device, a microprocessor device, various analog to digital converters, digital to analog converters, processing circuitry and other support circuits, for performing various functions including, for example, one or more of the functions described herein. The apparatus may perform control and signal processing functions of the electronic apparatus 10 among these devices according to their respective capabilities. The processor 11 thus may comprise the functionality to encode and interleave message and data prior to modulation and transmission. The processor 1 may additionally comprise an internal voice coder, and may comprise an internal data modem. Further, the processor 11 may comprise functionality to operate one or more software programs, which may be stored in memory and which may, among other things, cause the processor 11 to implement at least one embodiment including, for example, one or more of the functions described herein. For example, the processor 11 may operate a connectivity program, such as a conventional internet browser. The connectivity program may allow the electronic apparatus 10 to transmit and receive internet content, such as location-based content and/or other web page content, according to a Transmission Control Protocol (TCP), Internet Protocol (IP), User Datagram Protocol (UDP), Internet Message Access Protocol (IMAP), Post Office Protocol (POP), Simple Mail Transfer Protocol (SMTP), Wireless Application Protocol (WAP), Hypertext Transfer Protocol (HTTP), and/or the like, for example.

The electronic apparatus 10 may comprise a user interface for providing output and/or receiving input. The electronic apparatus 10 may comprise an output device 14. Output device 14 may comprise an audio output device, such as a ringer, an earphone, a speaker, and/or the like. Output device 14 may comprise a tactile output device, such as a vibration transducer, an electronically deformable surface, an electronically deformable structure, and/or the like. Output device 14 may comprise a visual output device, such as a display, a light, and/or the like. In at least one example embodiment, the apparatus causes display of information, the causation of display may comprise displaying the information on a display comprised by the apparatus, sending the information to a separate apparatus that comprises a display, and/or the like. The electronic apparatus may comprise an input device 13. Input device 13 may comprise a light sensor, a proximity sensor, a microphone, a touch sensor, a force sensor, a button, a keypad, a motion sensor, a magnetic field sensor, a camera, and/or the like. A touch sensor and a display may be characterized as a touch display. In an embodiment comprising a touch display, the touch display may be configured to receive input from a single point of contact, multiple points of contact, and/or the like. In such an embodiment, the touch display and/or the processor may determine input based, at least in part, on position, motion, speed, contact area, and/or the like. In at least one example embodiment, the apparatus receives an indication of an input. The apparatus may receive the indication from a sensor, a driver, a separate apparatus, and/or the like. The information indicative of the input may comprise information that conveys information indicative of the input, indicative of an aspect of the input indicative of occurrence of the input, and/or the like.

The electronic apparatus 10 may include any of a variety of touch displays including those that are configured to enable touch recognition by any of resistive, capacitive, infrared, strain gauge, surface wave, optical imaging, dispersive signal technology, acoustic pulse recognition or other techniques, and to then provide signals indicative of the location and other parameters associated with the touch. Additionally, the touch display may be configured to receive an indication of an input in the form of a touch event which may be defined as an actual physical contact between a selection object (e.g., a finger, stylus, pen, pencil, or other pointing device) and the touch display. Alternatively, a touch event may be defined as bringing the selection object in proximity to the touch display, hovering over a displayed object or approaching an object within a predefined distance, even though physical contact is not made with the touch display. As such, a touch input may comprise any input that is detected by a touch display including touch events that involve actual physical contact and touch events that do not involve physical contact but that are otherwise detected by the touch display, such as a result of the proximity of the selection object to the touch display. A touch display may be capable of receiving information associated with force applied to the touch screen in relation to the touch input. For example, the touch screen may differentiate between a heavy press touch input and a light press touch input. In at least one example embodiment, a display may display two-dimensional information, three-dimensional information and/or the like.

In embodiments including a keypad, the keypad may comprise numeric (for example, 0-9) keys, symbol keys (for example, #, *), alphabetic keys, and/or the like for operating the electronic apparatus 10. For example, the keypad may comprise a conventional QWERTY keypad arrangement. The keypad may also comprise various soft keys with associated functions. In addition, or alternatively, the electronic apparatus 10 may comprise an interface device such as a joystick or other user input interface.

Input device 13 may comprise a media capturing element. The media capturing element may be any means for capturing an image, video, and/or audio for storage, display or transmission. For example, in at least one example embodiment in which the media capturing element is a camera module, the camera module may comprise a digital camera which may form a digital image file from a captured image. As such, the camera module may comprise hardware, such as a lens or other optical component(s), and/or software necessary for creating a digital image file from a captured image. Alternatively, the camera module may comprise only the hardware for viewing an image, while a memory device of the electronic apparatus 10 stores instructions for execution by the processor 11 in the form of software for creating a digital image file from a captured image. In at least one example embodiment, the camera module may further comprise a processing element such as a co-processor that assists the processor 11 in processing image data and an encoder and/or decoder for compressing and/or decompressing image data. The encoder and/or decoder may encode and/or decode according to a standard format, for example, a Joint Photographic Experts Group (JPEG) standard format.

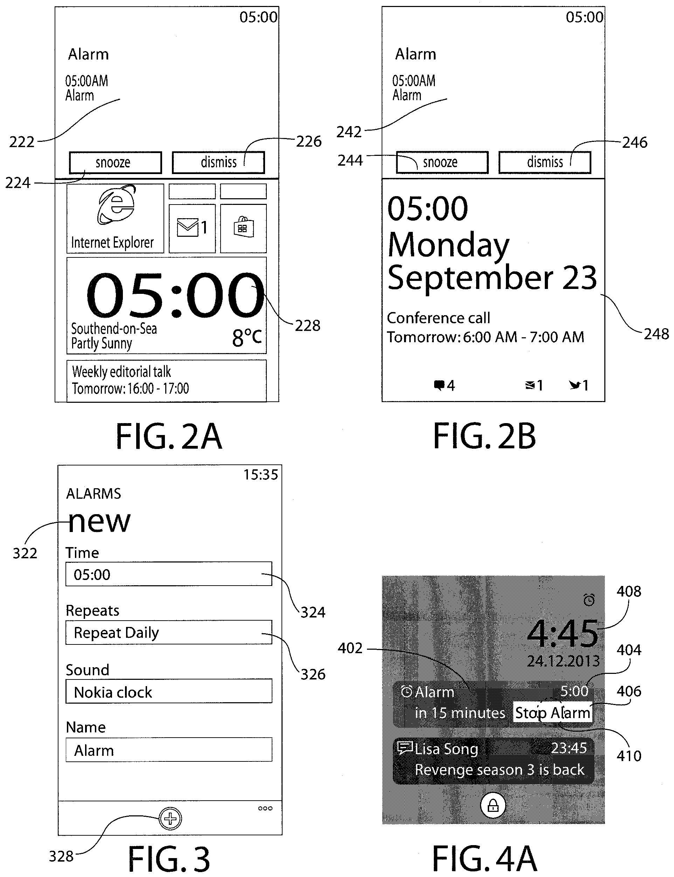

FIGURES 2A-2B are diagrams illustrating alarm notifications according to at least one example embodiment. The examples of FIGURES 2A-2B are merely examples and do not limit the scope of the claims. For example, visual representations may vary, interface elements may vary, content of the alarm notification may vary, and/or the like.

In many circumstances, users may desire to be notified of events that occur in relation to an apparatus. An event may be associated with any designated circumstance that may occur regarding an apparatus. In at least one example embodiment, such designated circumstances are associated with one or more criteria for the event. For example, the event may be a time related event, a condition related event, an environment related event, and/or the like. A time related event may be an event associated with chronology. For example, a time related event may be associated with a determination that a current time correlates with a predetermined chronological criteria. In such an example, a predetermined chronological criteria may be a current day, day of the week, date, time, and/or the like, such that determination of correspondence between the current time and the predetermined chronological criteria indicates occurrence of the time related event. For example, a predetermined chronological criteria may be associated with a calendar event, an alarm event, and/or the like. A calendar event may be an event that identifies correspondence between a current time and a designated time associated with the calendar event, such as a reminder, a start time, an end time, a departure time, and/or the like. In another example, a predetermined chronological criteria may be an alarm event. An alarm event may be associated with a current time corresponding to a predetermined time associated with the alarm. For example, an alarm may be a wakeup alarm, a timer alarm, a durational alarm, and/or the like. Such an alarm may be indicative of functionality associated with an alarm clock, functionality of a countdown timer, and/or the like.

In at least one example embodiment, an apparatus may determine occurrence of an alarm event. In at least one example embodiment, determination that the alarm event has occurred comprises determination that circumstances that correspond with a criteria for the alarm event have occurred. For example, such circumstances may be associated with a current time, a current date, a current day of the week, a current environmental factor, a receipt of input, receipt of a signal, entry of a designated state, and/or the like.

In some circumstances, a user may desire to be notified that an alarm event has occurred. In at least one example embodiment, an apparatus causes actuation of an alarm notification indicative of occurrence of an alarm event. For example, causation of actuation of the alarm notification may be caused by a determination that the alarm event has occurred. The alarm notification may be associated with any output that the apparatus provides to the user that signifies occurrence of the alarm event. For example, the alarm notification may indicate the alarm event by way of visual indication, tactile indication, audible indication, and/or the like. As such, the alarm notification may comprise a visual indication, a tactile indication, an audible indication, and/or the like. In this manner, the actuation of the alarm notification may comprise causation of display of the visual indication of the alarm notification, rendering of the audible indication of the alarm notification, actuation of the tactile indication of the alarm notification, and/or the like. In some circumstances, the alarm notification may unambiguously indicate the alarm event. For example, the alarm notification may be associated with visual information that identifies a type of the alarm event, a title of the alarm event, criteria of the alarm event, and/or the like. In another example, the alarm notification may be associated with an audible indication that may differ from an audible indication attributable to a different activity of the apparatus, a different event, a different alarm event, and/or the like. In another example, the alarm notification may be associated with a tactile indication that may differ from a tactile indication attributable to a different activity of the apparatus, a different event, and/or the like. In at least one example embodiment, actuation of the alarm notification is associated with an output device performing an action that provides for perception of the alarm notification. For example, actuation of the alarm notification may comprise display of information indicative of the alarm notification, rendering of audio information indicative of the alarm notification, actuation of a tactile sensation indicative of the alarm notification, and/or the like. In such an example, the apparatus may cause display of information indicative of the alarm notification on a display, a touch display, an alphanumeric display, a graphical display, a light emitting diode display, and/or the like. In such an example, the apparatus may cause rendering of audio information indicative of the alarm notification by way of an audio transducer, such as a speaker. In such an example, the apparatus may cause actuation of a tactile sensation indicative of the alarm notification by way of a tactile transducer, a heater, a cooler, a motor, and/or the like. The apparatus may cause actuation of the alarm notification by way of sending information to a separate apparatus to induce the actuation of the alarm notification by way of the separate apparatus or a different separate apparatus, by way of performing the actuation, and/or the like.

In some circumstances, it may be desirable to configure an alarm notification such that one or more characteristic of the alarm notification increases in scale, in magnitude, in value, in intensity, and/or the like. For example, a user may desire to be notified of occurrence of an alarm event such that the user may be gradually made aware of the occurrence of the alarm event, may slowly perceive actuation of an alarm notification that signifies occurrence of the alarm event, and/or the like. For example, the apparatus may dynamically increase a volume associated with an audible indication, may scale an intensity associated with rendering of a tactile indication, and/or the like. In at least one example embodiment, rendering of an audible indication of the alarm notification comprises rendering of the audible indication at a first volume and rendering of the audible indication at a second volume. In such an example embodiment, the rendering of the audible indication at the second volume may occur subsequent to the rendering of the audible indication at the first volume, and the second volume may be greater than the first volume. In this manner, the audible indication associated with the alarm notification may initially be rendered at a low volume, and may increase in volume over time, over a predetermined duration, and/or the like.

In at least one example embodiment, the alarm notification is indicative of a particular alarm event. For example, the alarm notification may indicate a particular occurrence of the alarm event. In such an example, the alarm notification may fail to correspond with a different occurrence of the alarm event. For example, upon occurrence of an alarm event, the apparatus may cause actuation of an alarm notification. However, upon a different occurrence of the same alarm event, the apparatus may cause actuation of a different alarm notification based, at least in part, on the different occurrence of the same alarm event. For example, an alarm may be a recurring alarm that is associated with actuation of an alarm notification at 5:00 each morning. In such an example, upon the occurrence of the recurring alarm event at 5:00 on the first day, the apparatus may cause actuation of an alarm notification based, at least in part, on the occurrence of the recurring alarm event on the first day. In such an example, upon occurrence of the recurring alarm event at 5:00 the next day, the apparatus may cause actuation of a different alarm notification based, at least in part, on the occurrence of the recurring alarm event on the next day.

In many circumstances, a user may desire to cause termination of actuation of an alarm notification indicating that an event has occurred. In some circumstances, the user may desire to disable the alarm notification, such that the apparatus no longer provides an alarm notification indicative of occurrence of the alarm event. For example, a user may desire to no longer be notified that a current time has corresponded with a particular alarm time. In such circumstances, the user may desire to perform an input that allows the apparatus to determine that the user desires such disablement of the alarm notification. In some circumstances, the user may desire to defer the alarm notification that the alarm event has occurred. For example, the user may desire to address the circumstances of the alarm event at a later time. In such an example, the user may desire to utilize snooze functionality associated with an alarm event, may desire to postpone waking up in the morning, and/or the like. In such an example, the user may desire to terminate the actuation of the alarm notification, and to cause a later actuation of the alarm notification at a later time. In such circumstances, the user may desire to perform an input that allows the apparatus to determine that the user desires such deferment of the alarm notification.

In at least one example embodiment, the apparatus receives an indication of an alarm notification disablement input. For example, the apparatus may receive an indication of an input, and that the input is the alarm notification disablement input. In at least one example embodiment, the alarm notification disablement input is an input that is associated with causation of disablement of the alarm notification that the alarm event has occurred. For example, the alarm notification disablement input may be an input that allows the apparatus to identify the input as a communication from the user of a desire to disable the alarm notification of the alarm event. In at least one example embodiment, the alarm notification disablement input is a gesture input. A gesture input may be a motion gesture input, a touch gesture input, and/or the like. For example, the motion gesture input may be an input that corresponds with movement in accordance with a predetermined motion pattern. The movement may be associated with movement of an object perceived by the apparatus, movement of the apparatus, and/or the like. For example, the gesture input may be associated with shaking of the apparatus, turning the apparatus to face a different direction, and/or the like. In another example, the touch gesture may be a touch input that corresponds with a predetermined touch pattern. For example, the touch pattern may be associated with a shape, a number of contact regions, a sequence of touch inputs, and/or the like.

In at least one example embodiment, the apparatus causes display of an alarm notification disablement interface element. In at least one example embodiment, an interface element is an element that indicates an input that may be performed such that the apparatus may interpret the input to be a particular input. For example, the interface element may be a button, a visual representation of a button, a visual representation of a selectable item, and/or the like. In at least one example embodiment, the alarm notification disablement input is an input that corresponds with the alarm notification disablement interface element. In at least one example embodiment, the causation of display of the alarm notification disablement interface element is based, at least in part, on a determination that the alarm event occurred. For example, the causation of display of the alarm notification disablement interface element may be caused by a determination that the alarm event has occurred.

In at least one example embodiment, the apparatus causes disablement of the alarm notification based, at least in part, on the alarm notification disablement input. For example, the apparatus may prevent a subsequent actuation of the alarm notification that signifies occurrence of the alarm event. In this manner, disablement of the alarm notification may be caused by the alarm notification disablement input.

In at least one example embodiment, the apparatus receives an indication of an alarm notification deferment input. In at least one example embodiment, the alarm notification deferment input is an input that is associated with causation of deferment of the alarm notification that the alarm event has occurred. For example, the alarm notification deferment input may be an input that allows the apparatus to identify the input as a communication from the user of a desire to defer the alarm notification of the alarm event. In at least one example embodiment, the alarm notification deferment input relates to a gesture input.

In at least one example embodiment, the apparatus causes display of an alarm notification deferment interface element. In at least one example embodiment, the alarm notification deferment input is an input that corresponds with the alarm notification deferment interface element. In at least one example embodiment, the causation of display of the alarm notification deferment interface element is based, at least in part, on a determination that the alarm event occurred. For example, the causation of display of the alarm notification deferment interface element may be caused by a determination that the alarm event has occurred.

In at least one example embodiment, the apparatus causes deferment of the alarm notification based, at least in part, on the alarm notification deferment input. For example, deferment of the alarm notification may be caused by the alarm notification deferment input. In at least one example embodiment, deferment of an alarm notification is associated with termination of the actuation of the alarm notification such that the apparatus causes another actuation of the alarm notification based, at least in part, on a determination that a deferment period has elapsed. For example the apparatus may cause another actuation of the alarm notification based, at least in part, on a determination that a deferment period has elapsed since receipt of the alarm notification deferment input, actuation of the alarm notification, occurrence of the alarm event, and/or the like. In at least one example embodiment, a deferment period is a duration of time after which the apparatus performs another actuation of the alarm notification based, at least in part on a deferment of the alarm notification.

In at least one example embodiment, an alarm notification disablement input is distinct from an alarm notification deferment input. For example, there may be an input associated with alarm notification deferment and a different input associated with alarm notification disablement. In at least one example embodiment, an alarm notification disablement interface element is distinct from an alarm notification deferment interface element. For example, there may be an interface element associated with alarm notification deferment and a different interface element associated with alarm notification disablement. For example, the alarm notification disablement input may fail to correspond with an alarm notification deferment interface element. In another example, the alarm notification deferment input may fail to correspond with an alarm notification disablement interface element.

In at least one example embodiment, disablement of the alarm notification is distinct from a deferment of the alarm notification of occurrence of the alarm event. For example, disablement of the alarm notification may preclude deferment of the alarm notification of occurrence of the alarm event. For example, disablement of the alarm notification may prevent the apparatus from performing another actuation of the alarm notification based, at least in part, on elapse of a deferment period.

FIGURE 2A is a diagram illustrating an alarm notification according to at least one example embodiment. The example of FIGURE 2A illustrates a visual notification 222 associated with an alarm event. The apparatus may cause actuation of visual notification 222 based, at least in part, on determination that the alarm event has occurred. The example of FIGURE 2A illustrates alarm notification deferment interface element 224 and alarm notification disablement interface element 226. It can be seen that visual notification 222, alarm notification deferment interface element 224, and alarm notification disablement interface element 226 are caused to be displayed to overlay screen 228. In at least one example embodiment, a screen relates to a set of information that is displayed. For example, a screen may be associated with a set of information associated with a particular program, an application, a home screen, and idle screen, a menu screen, and/or the like. As can be seen, the alarm event indicated by visual notification 222 is associated with a predetermined time of 05:00. In the example of FIGURE 2A, the current time, depicted in the upper right corner, is indicated to be 05:00. As such, visual notification 222 may have been caused to be displayed based, at least in part, on occurrence of an alarm event associated with visual notification 222. In this manner, correspondence between the predetermined time of 05:00 and the current time of 05:00 may be associated with occurrence of the alarm event, causation of display of visual notification 222, and/or the like.

In some circumstances, it may be desirable to configure an apparatus such that a user of the apparatus may interact with an alarm notification while the apparatus is operating in conformance with a locked interaction mode. For example, allowing a user to interact with the alarm notification in a locked interaction mode may allow the user to quickly and easily cause disablement of the alarm event, terminate actuation of the alarm notification, and/or the like. In at least one example embodiment, a locked interaction mode is characterized by limitation of interaction prior to user authentication. For example, the locked interaction mode may preclude performance of one or more operations associated with an apparatus, an application associated with the apparatus, a piece of software operating on the apparatus, and/or the like. In at least one example embodiment, the locked interaction mode is associated with authentication of a user of the apparatus. For example, the apparatus may cause display of one or more interface elements associated with authentication of a user of the apparatus based, at least in part, on the locked interaction mode. For example, the apparatus may authenticate a user of an apparatus by way of at least one authentication credential, and may cause initiation of an unlocked interaction mode based, at least in part, on the authentication of the user. The unlocked interaction mode may, for example, permit performance of one or more operations associated with the apparatus, an application associated with the apparatus, a piece of software operating on the apparatus, and/or the like. For example, the user may be permitted to perform one or more operations that may have been precluded from performance in the locked interaction mode.

In some circumstances, a user may desire to cause initiation of a locked interaction mode, cause termination of the locked interaction mode, cause initiation of an unlocked interaction mode, cause termination of the unlocked interaction mode, and/or the like. For example, the user may desire to prevent unauthorized access to data stored on the user's apparatus, may desire to preclude unintended performance of operations by way of the user's apparatus, and/or the like. In at least one example embodiment, an apparatus receives information indicative of a locked interaction mode initiation input. In such an example embodiment, the apparatus may cause initiation of a locked interaction mode, cause termination of an unlocked interaction mode, and/or the like, based, at least in part, on the locked interaction mode initiation input. As such, the apparatus may cause termination of an unlocked interaction mode based, at least in part, on the initiation of the locked interaction mode. Similarly, an apparatus may receive information indicative of a locked interaction mode termination input and, subsequently, cause termination of the locked interaction mode based, at least in part, on the locked interaction mode termination input. In such an example, the apparatus may cause initiation of an unlocked interaction mode based, at least in part, on the locked interaction mode termination input. In this manner, the apparatus may alternate between the locked interaction mode and the unlocked interaction mode. For example, the apparatus may receive information indicative of an unlocked interaction mode initiation input and, subsequently, cause termination of the locked interaction mode based, at least in part, on the unlocked interaction mode initiation input. In such an example embodiment, the apparatus may cause initiation of an unlocked interaction mode based, at least in part, on the unlocked interaction mode initiation input, the termination of the locked interaction mode, and/or the like.

In this manner, the user of the apparatus may cause disablement of the alarm event, to terminate actuation of the alarm event, and/or the like, quickly and easy. For example, the user may avoid delay associated with an unlocking procedure, may avoid entering of an authentication credential, and/or the like.

FIGURE 2B is a diagram illustrating an alarm notification according to at least one example embodiment. The example of FIGURE 2B illustrates a visual notification 242 associated with an alarm event. The apparatus may cause actuation of visual notification 242 based, at least in part, on determination that the alarm event has occurred. The example of FIGURE 2B illustrates alarm notification deferment interface element 244 and alarm notification disablement interface element 246. It can be seen that visual notification 242, alarm notification deferment interface element 244, and alarm notification disablement interface element 246 are caused to be displayed to overlay screen 248. In the example of FIGURE 2B, screen 248 is associated with a locked interaction mode. For example, screen 248 may be associated with a set of information associated with a lock screen, an idle screen, a standby screen, a screen associated with a locked interaction mode, a user authentication screen, and/or the like. As can be seen, the alarm event indicated by visual notification 242 is associated with a predetermined time of 05:00. In the example of FIGURE 2B, the current time, depicted in the upper right corner, is indicated to be 05:00. As such, visual notification 242 may have been caused to be displayed based, at least in part, on occurrence of an alarm event associated with visual notification 242. In this manner, correspondence between the predetermined time of 05:00 and the current time of 05:00 may be associated with occurrence of the alarm event, causation of display of visual notification 242, and/or the like.

Even though the examples of FIGURES 2A-2B indicate co-presence of an alarm notification deferment interface element and an alarm notification disablement interface element, any combination of such interface elements and absence of such interface elements may be provided.

FIGURE 3 is a diagram illustrating enablement and/or disablement of an event according to at least one example embodiment. The example of FIGURE 3 is merely an example and does not limit the scope of the claims. For example, visual representation may vary, information associated with the event may vary, manner of interaction may vary, and/or the like.

In some circumstances, a user may desire to enable and/or disable an alarm event. For example, the user may desire to avoid having the apparatus determine occurrences of the alarm event, avoid having the apparatus provide alarm notifications of occurrences of the alarm event, and/or the like. In at least one example embodiment, the apparatus causes enablement of an alarm event. In at least one example embodiment, enablement of an alarm event is associated with causing the apparatus to be configured to determine occurrence of the alarm event, cause actuation of an alarm notification based, at least in part, on determination that the alarm event occurred, and/or the like. In at least one example embodiment, the apparatus causes disablement of the alarm event. In at least one example embodiment, disablement of an alarm event is associated with causing the apparatus to be configured to avoid determination of occurrence of the alarm event, preclude actuation of an alarm notification based, at least in part, on determination that the alarm event occurred, and/or the like. For example, disablement of the alarm event may be performed such that, subsequent to the disablement of the alarm event, the apparatus is configured to avoid causation of actuation of an alarm notification based, at least in part, on a subsequent occurrence of the alarm event.

In at least one example embodiment, the apparatus receives an indication of an alarm event enablement input. In at least one example embodiment, the alarm event enablement input is an input that is associated with causation of enablement of the alarm event. For example, the alarm event enablement input may be an input that allows the apparatus to identify the input as a communication from the user of a desire to enablement the alarm event. In at least one example embodiment, the alarm event enablement input is a gesture input.

In at least one example embodiment, the apparatus receives an indication of an alarm event disablement input. In at least one example embodiment, the alarm event disablement input is an input that is associated with causation of disablement of the alarm event. For example, the alarm event disablement input may be an input that allows the apparatus to identify the input as a communication from the user of a desire to disable the alarm event. In at least one example embodiment, the alarm event disablement input is a gesture input.

In at least one example embodiment, the apparatus causes display of an alarm event enablement interface element. In at least one example embodiment, the alarm event enablement input is an input that corresponds with the alarm event enablement interface element. In at least one example embodiment, the apparatus causes display of an alarm event disablement interface element. In at least one example embodiment, the alarm event disablement input is an input that corresponds with the alarm event disablement interface element.

In at least one example embodiment, the apparatus causes enablement of the alarm event based, at least in part, on the alarm event enablement input. For example, enablement of the alarm event may be caused by the alarm event enablement input. In at least one example embodiment, the apparatus causes disablement of the alarm event based, at least in part, on the alarm event disablement input. For example, disablement of the alarm event may be caused by the alarm event disablement input.

In at least one example embodiment, an alarm event enablement input is distinct from an alarm notification deferment input. For example, there may be an input associated with alarm notification deferment and a different input associated with alarm event enablement. In at least one example embodiment, an alarm event enablement interface element is distinct from an alarm notification deferment interface element. For example, there may be an interface element associated with alarm notification deferment and a different interface element associated with alarm event enablement. For example, the alarm event enablement input may fail to correspond with an alarm notification deferment interface element. In another example, the alarm notification deferment input may fail to correspond with an alarm event enablement interface element.

In at least one example embodiment, an alarm event disablement input is distinct from an alarm notification deferment input. For example, there may be an input associated with alarm notification deferment and a different input associated with alarm event disablement. In at least one example embodiment, an alarm event disablement interface element is distinct from an alarm notification deferment interface element. For example, there may be an interface element associated with alarm notification deferment and a different interface element associated with alarm event disablement. For example, the alarm event disablement input may fail to correspond with an alarm notification deferment interface element. In another example, the alarm notification deferment input may fail to correspond with an alarm event disablement interface element.

In at least one example embodiment, an alarm event enablement input is distinct from an alarm notification disablement input. For example, there may be an input associated with alarm notification disablement and a different input associated with alarm event enablement. In at least one example embodiment, an alarm event enablement interface element is distinct from an alarm notification disablement interface element. For example, there may be an interface element associated with alarm notification disablement and a different interface element associated with alarm event enablement. For example, the alarm event enablement input may fail to correspond with an alarm notification disablement interface element. In another example, the alarm notification disablement input may fail to correspond with an alarm event enablement interface element.

In at least one example embodiment, an alarm event disablement input is distinct from an alarm notification disablement input. For example, there may be an input associated with alarm notification disablement and a different input associated with alarm event disablement. In at least one example embodiment, an alarm event disablement interface element is distinct from an alarm notification disablement interface element. For example, there may be an interface element associated with alarm notification disablement and a different interface element associated with alarm event disablement. For example, the alarm event disablement input may fail to correspond with an alarm notification disablement interface element. In another example, the alarm notification disablement input may fail to correspond with an alarm event disablement interface element.

FIGURE 3 illustrates a screen associated with enablement and/or disablement of an alarm event. It can be seen that interface element 324 identifies criteria for occurrence of the alarm event. It can be seen in the example of FIGURE 3 that representation 322 identifies the alarm event that may be enabled/disabled by way of the screen. In at least one example embodiment, the apparatus may transition from a different screen to the screen of FIGURE 3 to allow a user to enable and/or disable an alarm event.

It can be seen that there is a setting 326 that indicates enablement of determination of subsequent occurrences of the event associated with the alarm event. For example, the alarm event may be an alarm event that occurs only once. In such an example, the apparatus may disable the alarm event based, at least in part, on occurrence of the alarm event. In another example, the alarm event may be an alarm event that occurs more than once. In such an example, the alarm event may be a recurring alarm event. In at least one example embodiment, causation of disablement of the alarm event may comprise disablement of a next occurrence of the alarm event such that an occurrence of the alarm event that is subsequent to the next alarm event is enabled. In such an example embodiment, disablement of the alarm event may cause disablement of a single instance of the alarm event, a single actuation of an alarm notification associated with the alarm event, the next occurrence of the alarm notification, and/or the like. In such an example, the apparatus may determine that the alarm event that is subsequent to the next alarm event has occurred, and cause actuation of an alarm notification indicative of the occurrence of the alarm event that is subsequent to the next alarm event. In another example, the apparatus may determine occurrence of another pre-alarm event that is associated another occurrence of the alarm event. In such an example, the apparatus may cause actuation of another pre-alarm notification that is associated with the other pre-alarm event, such that a user may again indicate the user's desire to cause disablement of the other occurrence of the alarm event. In this manner, the apparatus may cause one or more actuation of an alarm notification associated with a recurring alarm event subsequent to occurrence of the single disabled instance of the alarm event, of the alarm notification, and/or the like.

In at least one example embodiment, icon 328 relates to an alarm event enablement interface item. For example, the apparatus may enable determination of occurrence of the alarm event based, at least in part, on an input corresponding with interface element 328. For example, the apparatus may store the settings of the example of FIGURE 3 based, at least in part, on receipt of input corresponding to icon 328. In at least one example embodiment, such storage may cause enablement of the alarm event.

FIGURES 4A-4C are diagrams illustrating pre-alarm notifications according to at least one example embodiment. The examples of FIGURES 4A-4C are merely examples and do not limit the scope of the claims. For example, pre-alarm notifications may vary, visual representations may vary, screen content may vary, and/or the like.

As previously discussed, in many circumstances, a user of an apparatus may desire to be notified of occurrence of a particular event, such as an alarm event. For example, the user may desire to configure an alarm event such that an associated alarm notification is rendered for purposes relating to waking up in the morning, getting to work on time, waking from a nap, reminding the user of a particular meeting, and/or the like. In some circumstances, a user may configure such an alarm event and, subsequently, desire to cause disablement of the alarm event, an occurrence of a recurring alarm event, and/or the like. For example, the user may wake up prior to actuation of the alarm notification associated with the alarm event, may arrive to a particular location before the alarm notification indicative of occurrence of the alarm event is actuated, and/or the like. In such an example, the user may desire to avoid actuation of the alarm notification, preclude actuation of a particular occurrence of an alarm notification associated with a particular occurrence of a recurring alarm event, and/or the like. For example, if the user of the apparatus awakes prior to actuation of an alarm notification associated with a particular alarm event, the user may desire to avoid actuation of the alarm notification. In such an example, the user may desire to avoid disturbing another individual that may be asleep, may desire to avoid undue stress and/or confusion associated with disablement of the alarm notification subsequent to actuation of the alarm notification, and/or the like. Similarly, if the user of the apparatus arrives to a meeting prior to actuation of an alarm notification associated with a particular alarm event, the user may desire to avoid actuation of the alarm notification. In such an example, the user may desire to avoid disturbing coworkers that may also be attending the meeting, may desire to avoid undue stress and/or confusion associated with disablement of the alarm notification subsequent to actuation of the alarm notification, and/or the like. As such, it may be desirable to configure an apparatus such that a user of the apparatus may quickly and intuitively cause disablement of an alarm event prior to actuation of an associated alarm notification.

As discussed previously, in many circumstances, a user may desire to cause disablement of a particular alarm event, occurrence of a recurring alarm event, and/or the like, such that an alarm notification associated with the alarm event is precluded from actuation. In order to facilitate quick and intuitive disablement of the alarm event, it may be desirable to configure an apparatus such that a user of the apparatus may indicate a desire to cause disablement of the alarm event within a duration of time prior to a time associated with actuation of an alarm notification associated with the alarm event. In at least one example embodiment, an apparatus determines a pre-alarm event that is associated with an alarm event. A pre-alarm event may be an event that is associated with a particular alarm event. For example, the pre-alarm event may be an event that is associated with predetermined chronological criteria that is at a time prior to predetermined chronological criteria associated with the alarm event. For example, the pre-alarm event may be an event that is associated with a time that is prior to a time associated with the alarm event. For example, the apparatus may determine that circumstances that correspond with a criteria for the pre-alarm event have occurred. In such an example, the criteria may be associated with a specific time, day of the week, date, duration prior to an associated alarm event, and/or the like. In at least one example embodiment, occurrence of a pre-alarm event causes performance of one or more operations associated with the alarm event. For example, occurrence of the pre-alarm event may cause display of information indicative of the alarm event, rendering of one or more interface elements associated with the alarm event, and/or the like. In this manner, occurrence of a pre-alarm event that is associated with an alarm event may permit a user to perceive information associated with the alarm event, interact with information associated with the alarm event, and/or the like.

In such circumstances, it may be desirable to allow a user to indicate the user's desire to cause disablement of the alarm event in an easy and intuitive manner. In at least one example embodiment, an apparatus causes actuation of a pre-alarm notification indicative of occurrence of the pre-alarm event. For example, occurrence of a pre-alarm event may cause actuation of an associated pre-alarm notification. For example, the actuation of the pre-alarm notification may comprise causation of display of a visual indication of the pre-alarm notification, causation of actuation of a tactile indication of the pre-alarm notification, and/or the like.

As discussed previously, in some circumstances, a user may desire to avoid actuation of a pre-alarm notification which may disturb another individual, may awaken another person, and/or the like. For example, a user of an apparatus may configure an alarm event such that the apparatus determines occurrence of the alarm event and actuation of an alarm notification that indicates occurrence of the alarm event. In such an example, the user may set an alarm to wake the user up in the morning, may awake prior to occurrence of the alarm event, and may cause disablement of the alarm event by way of a pre-alarm notification associated with a pre-alarm event. In such an example, the user may sleep proximate to another individual, such as the user's roommate, spouse, and/or the like. In this manner, the actuation of the pre-alarm notification, such as rendering of an audible indication of the pre-alarm notification, rendering of a tactile indication of the pre-alarm notification, and/or the like, may awake the user's roommate, spouse, and/or the like. In such circumstances, it may be desirable to cause actuation of a pre-alarm notification in such a manner that avoids disturbance of another individual, awakening of another person, and/or the like. In at least one example embodiment, the actuation of the pre-alarm notification precludes causation of rendering of an audible indication of the pre-alarm notification. In such an example embodiment, the apparatus may cause rendering of a visual indication of the pre-alarm notification absent an audible indication of the pre-alarm notification. In at least one example embodiment, the actuation of the pre-alarm notification precludes causation of actuation of a tactile indication of the pre-alarm notification. In such an example embodiment, the apparatus may cause rendering of a visual indication of the pre-alarm notification absent a tactile indication of the pre-alarm notification.

In many circumstances, it may be desirable to configure an apparatus such that the apparatus causes actuation of the pre-alarm notification in a manner that permits a user of the apparatus to readily perceive the pre-alarm notification. For example, the user may wake up and desire to quickly cause disablement of a particular alarm event in order to prevent actuation of the associated alarm notification. In at least one example embodiment, the pre-alarm notification is actuated in a locked interaction mode. In this manner, the user of the apparatus may quickly and easily perceive the pre-alarm notification, determine an amount of time prior to actuation of the alarm notification, and/or the like.

In order to facilitate causation of disablement of an alarm event by way of a pre-alarm notification, it may be desirable to configure an apparatus such that a user of the apparatus may indicate the user's desire to cause disablement of the alarm event in an easy and intuitive manner. For example, it may be desirable to provide a user with a user interface associated with disablement of the alarm event. In at least one example embodiment, an apparatus causes display of an alarm notification disablement interface element. The causation of display of the alarm notification disablement interface element may be based, at least in part, on the determination that the pre-alarm event has occurred. In at least one example embodiment, an apparatus receives an indication of an alarm notification disablement input associated with the pre-alarm notification. The alarm notification disablement input may, for example, correspond with the alarm notification disablement interface element. In such an example, the alarm notification disablement interface element may be displayed at a display position on a display, and the alarm notification disablement input may be received at an input position on the display that corresponds with the display position. In at least one example embodiment, an apparatus causes disablement of the alarm event based, at least in part, on the alarm notification disablement input.

In at least one example embodiment, the alarm notification disablement input is received in a locked interaction mode. In such an example embodiment, configuring the apparatus such that a user of the apparatus may interact with a pre-alarm notification while the apparatus is operating in conformance with the locked interaction mode may allow the user to quickly and easily cause disablement of the alarm event associated with the pre-alarm event, the pre-alarm notification, and/or the like. In this manner, the user of the apparatus may cause disablement of the alarm event and preclude actuation of the associated alarm notification quickly and easy. For example, the user may avoid delay associated with an unlocking procedure, may avoid entering of an authentication credential, and/or the like.

FIGURE 4A is a diagram illustrating a pre-alarm notification according to at least one example embodiment. The example of FIGURE 4A depicts a lock screen associated with a locked interaction mode. As can be seen, the lock screen comprises visual indication 402 of a pre-alarm notification. In the example of FIGURE 4A, the pre-alarm notification is associated with an alarm event. As can be seen, the alarm event is associated with an alarm notification that is scheduled to actuate at 5:00, as indicated by predetermined chronological criteria 404. As can be seen in the example of FIGURE 4A, the current time 408 is 4:45, and the alarm notification is scheduled to actuate in 15 minutes. In the example of FIGURE 4A, a user of the apparatus may desire to cause disablement of the alarm event such that the apparatus precludes actuation of the alarm notification in 15 minutes. As such, the user may indicate such a desire by way of alarm notification disablement input 410 at a position that corresponds with alarm notification disablement interface element 406.

In some circumstances, it may be desirable to configure an alarm notification, and notification disablement interface element, and/or an alarm notification disablement input such that a user may avoid accidental causation of disablement of an alarm event. For example, it may be desirable to configure an apparatus such that the apparatus may infer a user's specific intent to cause disablement of the alarm notification. In at least one example embodiment, an apparatus causes actuation of a pre-alarm notification. In such an example, the actuation of the pre-alarm notification may comprise display of a visual indication of the pre-alarm notification on a display. In such an example embodiment, the apparatus may receive an indication of a pre-alarm notification selection input associated with the pre-alarm notification. In this manner, a user of the apparatus may select a specific pre-alarm notification that is associated with a specific alarm event by way of a pre-alarm notification selection input that identifies the pre-alarm notification, the alarm event, and/or the like. In at least one example embodiment, subsequent to receipt of the indication of the pre-alarm notification selection input, an apparatus causes display of an alarm notification disablement interface element. In such an example embodiment, the display of the alarm notification disablement interface element may be based, at least in part, on the pre-alarm notification selection input. In such an example embodiment, the receipt of the indication of the alarm notification disablement input associated with the pre-alarm notification may comprise receipt of the indication of the alarm notification disablement input associated with the alarm notification disablement interface element. As such, the receipt of the indication of the pre-alarm notification selection input may occur prior to the receipt of the indication of the alarm notification disablement input associated with the pre-alarm notification. In such an example embodiment, the apparatus may cause disablement of the alarm event based, at least in part, on the alarm notification disablement input.

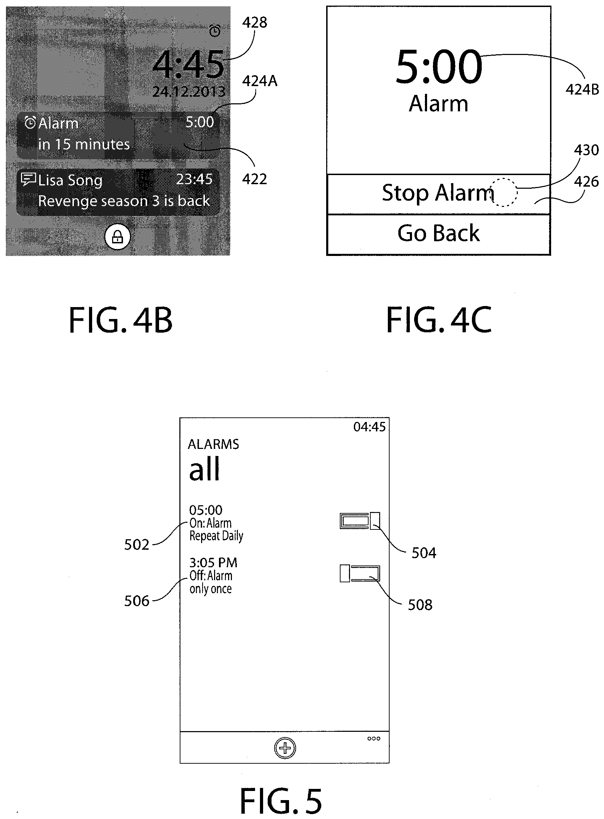

FIGURE 4B is a diagram illustrating a pre-alarm notification according to at least one example embodiment. The example of FIGURE 4B depicts a lock screen associated with a locked interaction mode. As can be seen, the lock screen comprises visual indication 422 of a pre-alarm notification. In the example of FIGURE 4B, the pre-alarm notification is associated with an alarm event. As can be seen, the alarm event is associated with an alarm notification that is scheduled to actuate at 5:00, as indicated by predetermined chronological criteria 424A. As can be seen in the example of FIGURE 4B, the current time 428 is 4:45, and the alarm notification is scheduled to actuate in 15 minutes. In the example of FIGURE 4B, a user of the apparatus may desire to cause disablement of the alarm event such that the apparatus precludes actuation of the alarm notification in 15 minutes. As such, the user may indicate such a desire by way of a pre-alarm notification selection input at a position that corresponds with visual indication 422.

FIGURE 4C is a diagram illustrating a pre-alarm notification according to at least one example embodiment. The example of FIGURE 4C corresponds with the example of FIGURE 4B subsequent to receipt of the pre-alarm notification selection input at the position that corresponds with visual indication 422 of FIGURE 4B. As can be seen, predetermined chronological criteria 424B corresponds with predetermined chronological criteria 424A of FIGURE 4B. In the example of FIGURE 4C, the user of the apparatus may desire to cause disablement of the alarm event associated with predetermined chronological criteria 424B. For example, the user may desire to preclude actuation of an alarm notification associated with the alarm event. As such, the user may indicate such a desire by way of alarm notification disablement input 430 at a position that corresponds with alarm notification disablement interface element 426.

FIGURE 5 is a diagram illustrating enablement and/or disablement of an event according to at least one example embodiment. The example of FIGURE 5 is merely an example and does not limit the scope of the claims. For example, visual representation may vary, information associated with the event may vary, manner of interaction may vary, and/or the like.

In some circumstances, it may be desirable to selectively cause actuation of a pre-alarm notification based, at least in part, on an indication that user of an apparatus may desire to cause disablement of an alarm event that may be associated with the pre-alarm notification. For example, a user of an apparatus may commonly set an alarm to wake up in the morning at 5:00. In such an example, the user may often wake up naturally at 4:45 and, in order to prevent waking the user's spouse, the user may navigation through several menus until the user is able to cause disablement of the alarm event. In such an example embodiment, the navigation through the several menus may be cumbersome, may cause delay such that an alarm notification associated with the alarm event actuates prior to disablement of the alarm event, and/or the like. As such, it may be desirable to selectively cause actuation of a pre-alarm notification based, at least in part, on information indicative of a prior disablement of an alarm event. In at least one example embodiment, an apparatus determines a pre-alarm event that is associated with an alarm event based, at least in part, on historical alarm event disablement information. The historical alarm event disablement information may be information that is indicative of one or more previous disablements of the alarm event. For example, the historical alarm event disablement information may comprise information indicative of a disablement time. The disablement time may be associated with a duration prior to a time specified by the alarm event, a time associated with performance of the disablement of the alarm event, a time associated with receipt of information indicative of a prior alarm notification disablement input, and/or the like. As such, if the user commonly indicates a desire to cause disablement of an alarm event 15 minutes prior to the alarm event, the apparatus may determine a pre-alarm event to be an event that is 15 minutes prior to the alarm event, 20 minutes prior to the alarm event, and/or the like. Similarly, if the user commonly indicates a desire to cause disablement of an alarm event associated with 5:00 at 4:45, the apparatus may determine a pre-alarm event to be an event that is associated with a predetermined chronological criteria of 4:45, 4:30, and/or the like. In this manner, the apparatus may determine the pre-alarm event such that a pre-alarm notification associated with the pre-alarm event is actuated at a time based, at least in part, on prior disablement activities of the user, such that the user may indicate the user's desire to cause disablement of the alarm event by way of the pre-alarm notification.

In order to facilitate such a determination based, at least in part, on the historical alarm event disablement information, it may be desirable to cause storage of information associated with prior actuation of an alarm notification, prior disablement of an alarm event, and/or the like. In at least one example embodiment, an apparatus determines that an alarm event has occurred. In such an example embodiment, the determination that the alarm event has occurred may be prior to the determination of the pre-alarm event. In such an example embodiment, the apparatus may cause an actuation of an alarm notification indicative of the occurrence of the alarm event and, subsequently, receive information indicative of a prior alarm notification disablement input associated with the alarm notification. The apparatus may cause disablement of the alarm event based, at least in part, on the prior alarm notification disablement input, and cause storage of information indicative of the disablement of the alarm event. In such an example embodiment, the historical alarm event disablement information may be based, at least in part, on the information indicative of the disablement of the alarm event. For example, the information indicative of the disablement of the alarm event may be associated with a time of disablement of the alarm event, a time of the alarm event, a duration prior to the alarm event, a duration prior to the actuation of the alarm notification, and/or the like.

In some circumstances, it may be desirable to determine a pre-alarm event based, at least in part, on user preference, user activity, and/or the like. For example, the user of an apparatus may desire to cause actuation of a pre-alarm notification 15 minutes prior to actuation of all alarm notifications, 20 minutes prior to actuation of a specific alarm event, and/or the like. In another example, it may be desirable to cause actuation of a pre-alarm notification at a time during which the user is likely to indicate a desire to cause disablement of an alarm event. For example, if a user awakes prior to actuation of an alarm notification, it may be inferred that the user may desire to prevent actuation of the alarm notification as the user is already awake. In such an example, the apparatus may determine a pre-alarm notification based, at least in part, on information indicative of a state of the user. For example, the information indicative of the state of the user may be associated with a level of lighting, an amount of motion, an increase in ambient sound, and/or the like. For example, the user may awaken and turn on one or more lights in a room. In such an example, the apparatus may infer that the user has woken up prior to actuation of the alarm notification, prior to occurrence of the alarm event, and/or the like, based, at least in part, on the increase in the level of lighting in the room.

FIGURE 5 illustrates a screen associated with enablement and/or disablement of alarm events. It can be seen that interface element 504 is both an alarm event enablement interface element and an alarm event disablement interface element that is associated with an alarm event indicated by event representation 502. It can be seen that interface element 508 is both an alarm event enablement interface element and an alarm event disablement interface element that is associated with an alarm event indicated by event representation 506. Interface elements 508 and 504 may be an alarm event disablement interface element when an associated alarm event is enabled. Interface elements 508 and 504 may be an alarm event enablement interface element when an associated alarm event is disabled. In at least one example embodiment, the apparatus may transition from a different screen to the screen of FIGURE 5 to allow a user to enable and/or disable an event. It can be seen that there is a setting that indicates enablement of determination of subsequent occurrences of the alarm event associated with the alarm events of representations 502 and 504. For example, the alarm event indicated by representation 502 is associated with an alarm event that occurs daily. In another example, the alarm event indicated by representation 504 is associated with an alarm event that occurs only once. In such an example, the apparatus may disable the alarm event based, at least in part, on occurrence of the alarm event.

In the example of FIGURE 5, a user may indicate a desire to cause disablement of an alarm event prior to actuation of an alarm notification associated with the alarm event by way of interface element 504, interface element 508, and/or the like. For example, as can be seen in FIGURE 5, the current time is 4:45. As can be seen, interface element 504 indicates that the alarm event indicated by representation 502 is enabled. In the example of FIGURE 5, the alarm event indicated by representation 502 is associated with a predetermined chronological criteria of 5:00. If the user of the apparatus indicates a desire to cause disablement of the alarm event indicated by representation 502 by way of interface element 504, the apparatus may cause storage of information indicative of the disablement of the alarm event indicated by representation 502. As such, the historical alarm event disablement information may be based, at least in part, on the information indicative of the disablement of the alarm event. For example, the historical alarm event disablement information may indicate that the user disabled the alarm event at 4:45, that the user disabled the alarm event 15 minutes prior to the predetermined chronological criteria associated with the alarm event, and/or the like.

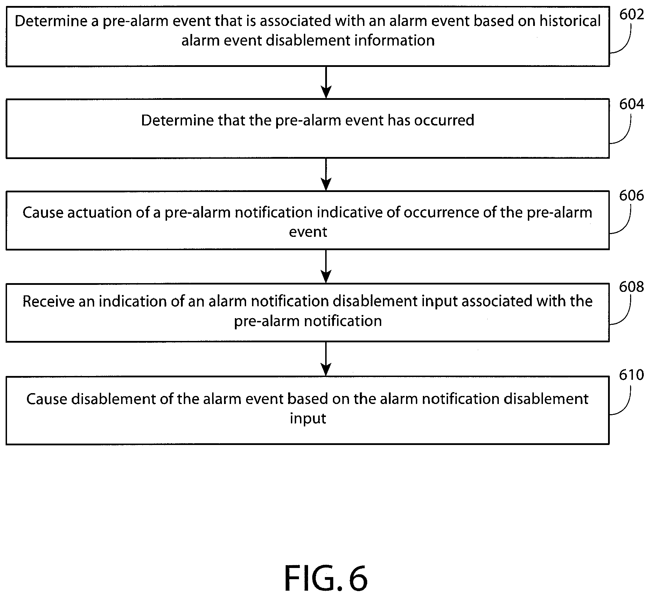

FIGURE 6 is a flow diagram illustrating activities associated with causation of disablement of an alarm event according to at least one example embodiment. In at least one example embodiment, there is a set of operations that corresponds with the activities of FIGURE 6. An apparatus, for example electronic apparatus 10 of FIGURE 1, or a portion thereof, may utilize the set of operations. The apparatus may comprise means, including, for example processor 11 of FIGURE 1, for performance of such operations. In an example embodiment, an apparatus, for example electronic apparatus 10 of FIGURE 1, is transformed by having memory, for example memory 12 of FIGURE 1, comprising computer code configured to, working with a processor, for example processor 11 of FIGURE 1, cause the apparatus to perform set of operations of FIGURE 6.

At block 602, the apparatus determines a pre-alarm event based, at least in part, on historical alarm event disablement information. In at least one example embodiment, the pre-alarm event is associated with an alarm event. The determination, the pre-alarm event, the historical alarm event disablement information, and the alarm event may be similar as described regarding FIGURES 2A-2B, FIGURE 3, FIGURES 4A-4C, and FIGURE 5.

At block 604, the apparatus determines that the pre-alarm event has occurred. The determination and the occurrence of the pre-alarm event may be similar as described regarding FIGURES 4A-4C and FIGURE 5.

At block 606, the apparatus causes actuation of a pre-alarm notification indicative of occurrence of the pre-alarm event. The causation of actuation and the pre-alarm notification may be similar as described regarding FIGURES 4A-4C and FIGURE 5.

At block 608, the apparatus receives an indication of an alarm notification disablement input associated with the pre-alarm notification. The receipt and the alarm notification disablement input may be similar as described regarding FIGURES 4A-4C and FIGURE 5.

At block 610, the apparatus causes disablement of the alarm event based, at least in part, on the alarm notification disablement input. The causation and the disablement of the alarm event may be similar as described regarding FIGURES 2A-2B, FIGURE 3, FIGURES 4A-4C, and FIGURE 5.

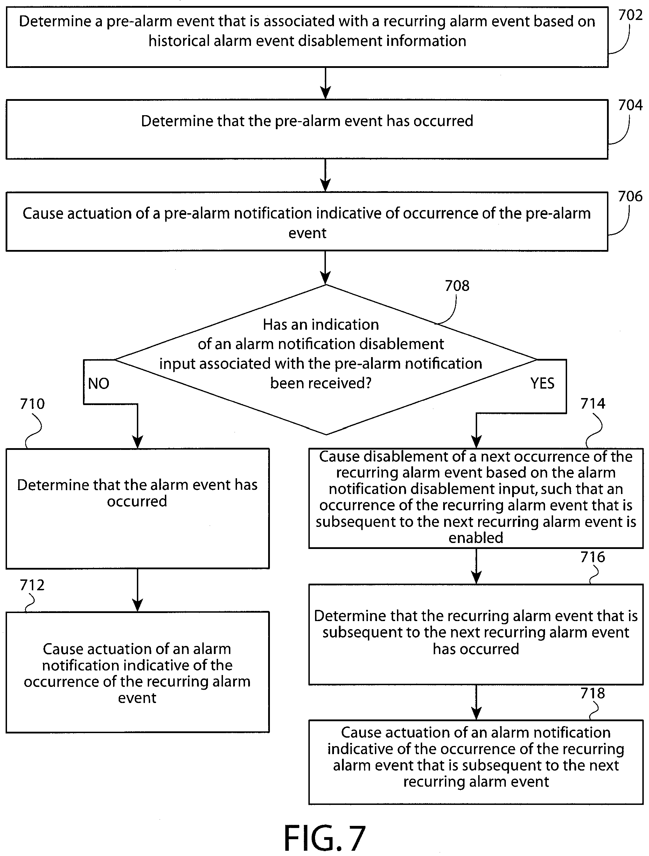

FIGURE 7 is a flow diagram illustrating activities associated with causation of disablement of a next occurrence of a recurring alarm event according to at least one example embodiment. In at least one example embodiment, there is a set of operations that corresponds with the activities of FIGURE 7. An apparatus, for example electronic apparatus 10 of FIGURE 1, or a portion thereof, may utilize the set of operations. The apparatus may comprise means, including, for example processor 11 of FIGURE 1, for performance of such operations. In an example embodiment, an apparatus, for example electronic apparatus 10 of FIGURE 1, is transformed by having memory, for example memory 12 of FIGURE 1, comprising computer code configured to, working with a processor, for example processor 11 of FIGURE 1, cause the apparatus to perform set of operations of FIGURE 7.

As discussed previously, in some circumstances, it may be desirable to cause disablement of a single occurrence of a recurring alarm based, at least in part, on receipt of an indication of an alarm notification disablement input associated with a pre-alarm notification. In some circumstances, it may be desirable to cause actuation of an alarm notification indicative of an occurrence of a recurring alarm event based, at least in part, on a failure to receive an indication of an alarm notification disablement input associated with a pre-alarm notification.

At block 702, the apparatus determines a pre-alarm event based, at least in part, on historical alarm event disablement information. In at least one example embodiment, the pre-alarm event is associated with an alarm event. In at least one example embodiment, the alarm event is a recurring alarm event. The determination, the pre-alarm event, the historical alarm event disablement information, the alarm event, and the recurring alarm event may be similar as described regarding FIGURES 2A-2B, FIGURE 3, FIGURES 4A-4C, and FIGURE 5.

At block 704, the apparatus determines that the pre-alarm event has occurred. The determination and the occurrence of the pre-alarm event may be similar as described regarding FIGURES 4A-4C and FIGURE 5.

At block 706, the apparatus causes actuation of a pre-alarm notification indicative of occurrence of the pre-alarm event. The causation of actuation and the pre-alarm notification may be similar as described regarding FIGURES 4A-4C and FIGURE 5.

At block 708, the apparatus determines whether an indication of an alarm notification disablement input associated with the pre-alarm notification has been received. If the indication of the alarm notification disablement input associated with the pre-alarm notification has been received, flow proceeds to block 714. If the indication of the alarm notification disablement input associated with the pre-alarm notification has failed to have been received, flow proceeds to block 710. The determination, the receipt, and the alarm notification disablement input may be similar as described regarding FIGURES 4A-4C and FIGURE 5.

At block 710, the apparatus determines that the alarm event has occurred. In this manner, the determination that the alarm event has occurred may be based, at least in part, on the determination that the indication of the alarm notification disablement input associated with the pre-alarm notification has failed to have been received. The determination may be similar as described regarding FIGURES 2A-2B, FIGURE 3, FIGURES 4A-4C, and FIGURE 5.

At block 712, the apparatus causes actuation of an alarm notification indicative of the occurrence of the recurring alarm event. The causation of actuation and the alarm notification may be similar as described regarding FIGURES 2A-2B, FIGURE 3, FIGURES 4A-4C, and FIGURE 5.

At block 714, the apparatus causes disablement of a next occurrence of the recurring alarm event based, at least in part, on the alarm notification disablement input. In at least one example embodiment, the disablement of the next occurrence of the recurring alarm event is performed such that an occurrence of the recurring alarm event that is subsequent to the next recurring alarm event is enabled. In this manner, the causation of disablement of the next occurrence of the recurring alarm event may be based, at least in part, on the determination that the indication of the alarm notification disablement input associated with the pre-alarm notification has been received. The causation of disablement, the next occurrence of the recurring alarm event, and the occurrence of the recurring alarm event that is subsequent to the next recurring alarm event may be similar as described regarding FIGURES 2A-2B, FIGURE 3, FIGURES 4A-4C, and FIGURE 5.

At block 716, the apparatus determines that the recurring alarm event that is subsequent to the next recurring alarm event has occurred. The determination may be similar as described regarding FIGURES 2A-2B, FIGURE 3, FIGURES 4A-4C, and FIGURE 5.

At block 718, the apparatus causes actuation of an alarm notification indicative of the occurrence of the recurring alarm event that is subsequent to the next recurring alarm event. The causation of actuation and the alarm notification may be similar as described regarding FIGURES 2A-2B, FIGURE 3, FIGURES 4A-4C, and FIGURE 5.

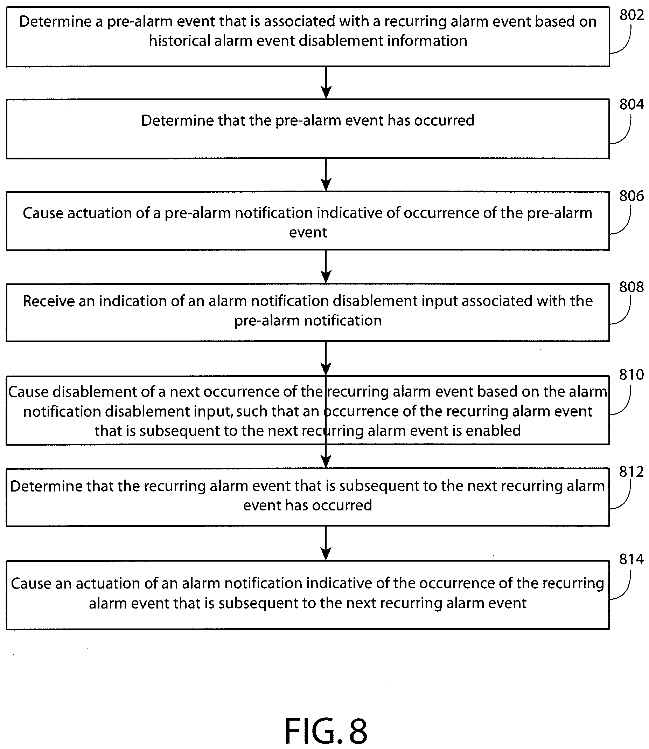

FIGURE 8 is a flow diagram illustrating activities associated with causation of disablement of a next occurrence of a recurring alarm event according to at least one example embodiment. In at least one example embodiment, there is a set of operations that corresponds with the activities of FIGURE 8. An apparatus, for example electronic apparatus 10 of FIGURE 1, or a portion thereof, may utilize the set of operations. The apparatus may comprise means, including, for example processor 11 of FIGURE 1, for performance of such operations. In an example embodiment, an apparatus, for example electronic apparatus 10 of FIGURE 1, is transformed by having memory, for example memory 12 of FIGURE 1, comprising computer code configured to, working with a processor, for example processor 11 of FIGURE 1, cause the apparatus to perform set of operations of FIGURE 8.

As discussed previously, in some circumstances, it may be desirable to cause disablement of a single occurrence of a recurring alarm based, at least in part, on receipt of an indication of an alarm notification disablement input associated with a pre-alarm notification.

At block 802, the apparatus determines a pre-alarm event based, at least in part, on historical alarm event disablement information. In at least one example embodiment, the pre-alarm event is associated with an alarm event. In at least one example embodiment, the alarm event is a recurring alarm event. The determination, the pre-alarm event, the historical alarm event disablement information, the alarm event, and the recurring alarm event may be similar as described regarding FIGURES 2A-2B, FIGURE 3, FIGURES 4A-4C, and FIGURE 5.

At block 804, the apparatus determines that the pre-alarm event has occurred. The determination and the occurrence of the pre-alarm event may be similar as described regarding FIGURES 4A-4C and FIGURE 5.

At block 806, the apparatus causes actuation of a pre-alarm notification indicative of occurrence of the pre-alarm event. The causation of actuation and the pre-alarm notification may be similar as described regarding FIGURES 4A-4C and FIGURE 5.

At block 808, the apparatus receives an indication of an alarm notification disablement input associated with the pre-alarm notification. The receipt and the alarm notification disablement input may be similar as described regarding FIGURES 4A-4C and FIGURE 5.

At block 810, the apparatus causes disablement of a next occurrence of the recurring alarm event based, at least in part, on the alarm notification disablement input. In at least one example embodiment, the disablement of the next occurrence of the recurring alarm event is performed such that an occurrence of the recurring alarm event that is subsequent to the next recurring alarm event is enabled. The causation of disablement, the next occurrence of the recurring alarm event, and the occurrence of the recurring alarm event that is subsequent to the next recurring alarm event may be similar as described regarding FIGURES 2A-2B, FIGURE 3, FIGURES 4A-4C, and FIGURE 5.

At block 812, the apparatus determines that the recurring alarm event that is subsequent to the next recurring alarm event has occurred. The determination may be similar as described regarding FIGURES 2A-2B, FIGURE 3, FIGURES 4A-4C, and FIGURE 5.

At block 814, the apparatus causes actuation of an alarm notification indicative of the occurrence of the recurring alarm event that is subsequent to the next recurring alarm event. The causation of actuation and the alarm notification may be similar as described regarding FIGURES 2A-2B, FIGURE 3, FIGURES 4A-4C, and FIGURE 5.

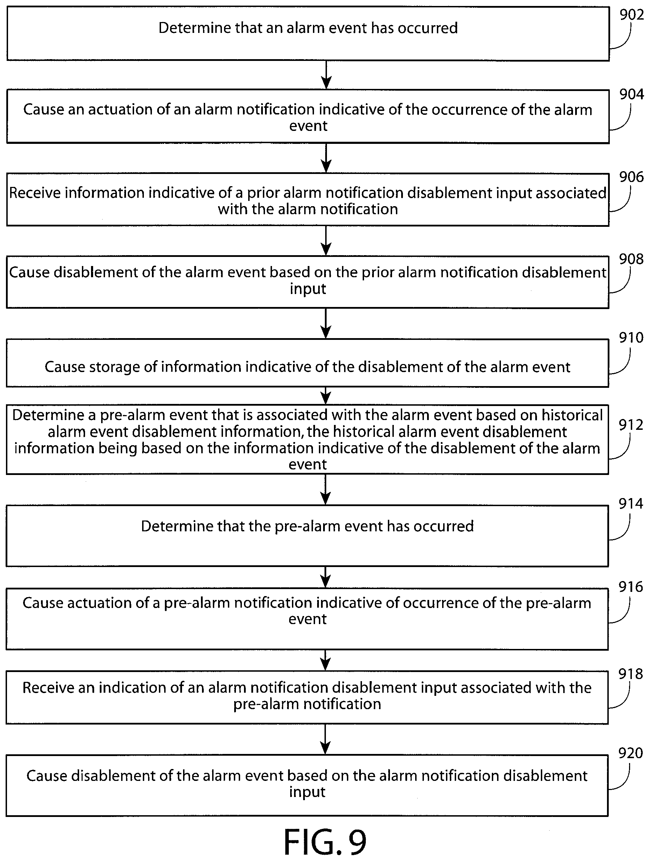

FIGURE 9 is a flow diagram illustrating activities associated with causation of disablement of an alarm event according to at least one example embodiment. In at least one example embodiment, there is a set of operations that corresponds with the activities of FIGURE 9. An apparatus, for example electronic apparatus 10 of FIGURE 1, or a portion thereof, may utilize the set of operations. The apparatus may comprise means, including, for example processor 11 of FIGURE 1, for performance of such operations. In an example embodiment, an apparatus, for example electronic apparatus 10 of FIGURE 1, is transformed by having memory, for example memory 12 of FIGURE 1, comprising computer code configured to, working with a processor, for example processor 11 of FIGURE 1, cause the apparatus to perform set of operations of FIGURE 9.

As discussed previously, in many circumstances, it may be desirable to cause storage of information indicative of disablement of an alarm event.

At block 902, the apparatus determines that an alarm event has occurred. The determination and the alarm event may be similar as described regarding FIGURES 2A-2B, FIGURE 3, FIGURES 4A-4C, and FIGURE 5.

At block 904, the apparatus causes actuation of an alarm notification indicative of the occurrence of the alarm event. The causation of actuation and the alarm notification may be similar as described regarding FIGURES 2A-2B, FIGURE 3, FIGURES 4A-4C, and FIGURE 5.

At block 906, the apparatus receives information indicative of a prior alarm notification disablement input associated with the alarm notification. The receipt and the prior alarm notification disablement input may be similar as described regarding FIGURES 2A-2B, FIGURE 3, FIGURES 4A-4C, and FIGURE 5.

At block 908, the apparatus causes disablement of the alarm event based, at least in part, on the prior alarm notification disablement input. The causation of disablement of the alarm event may be similar as described regarding FIGURES 2A-2B, FIGURE 3, FIGURES 4A-4C, and FIGURE 5.

At block 910, the apparatus causes storage of information indicative of the disablement of the alarm event. The causation of storage and the information indicative of the disablement of the alarm event may be similar as described regarding FIGURES 2A-2B, FIGURE 3, FIGURES 4A-4C, and FIGURE 5.

At block 912, the apparatus determines a pre-alarm event based, at least in part, on historical alarm event disablement information. In at least one example embodiment, the pre-alarm event is associated with an alarm event. In at least one example embodiment, the historical alarm event disablement information is based, at least in part, on the information indicative of the disablement of the alarm event. The determination, the pre-alarm event, the historical alarm event disablement information, and the alarm event may be similar as described regarding FIGURES 2A-2B, FIGURE 3, FIGURES 4A-4C, and FIGURE 5.

At block 914, the apparatus determines that the pre-alarm event has occurred. The determination and the occurrence of the pre-alarm event may be similar as described regarding FIGURES 4A-4C and FIGURE 5.

At block 916, the apparatus causes actuation of a pre-alarm notification indicative of occurrence of the pre-alarm event. The causation of actuation and the pre-alarm notification may be similar as described regarding FIGURES 4A-4C and FIGURE 5.

At block 918, the apparatus receives an indication of an alarm notification disablement input associated with the pre-alarm notification. The receipt and the alarm notification disablement input may be similar as described regarding FIGURES 4A-4C and FIGURE 5.

At block 920, the apparatus causes disablement of the alarm event based, at least in part, on the alarm notification disablement input. The causation and the disablement of the alarm event may be similar as described regarding FIGURES 2A-2B, FIGURE 3, FIGURES 4A-4C, and FIGURE 5.

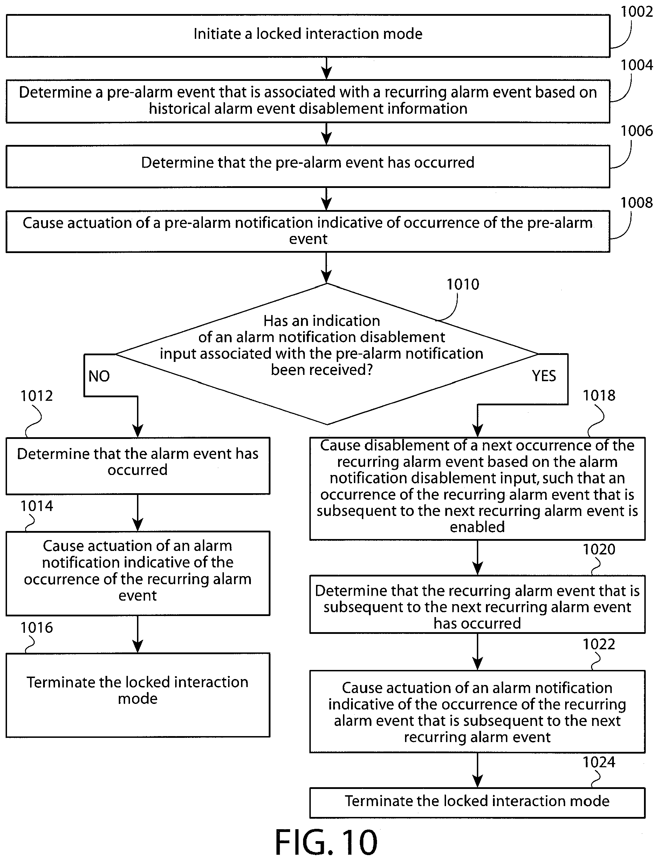

FIGURE 10 is a flow diagram illustrating activities associated with initiation and/or termination of a locked interaction mode according to at least one example embodiment. In at least one example embodiment, there is a set of operations that corresponds with the activities of FIGURE 10. An apparatus, for example electronic apparatus 10 of FIGURE 1, or a portion thereof, may utilize the set of operations. The apparatus may comprise means, including, for example processor 11 of FIGURE 1, for performance of such operations. In an example embodiment, an apparatus, for example electronic apparatus 10 of FIGURE 1, is transformed by having memory, for example memory 12 of FIGURE 1, comprising computer code configured to, working with a processor, for example processor 11 of FIGURE 1, cause the apparatus to perform set of operations of FIGURE 10.

As discussed previously, in many circumstances, it may be desirable to configure an apparatus such that a user of the apparatus may interact with a pre-alarm notification in a locked interaction mode.

At block 1002, the apparatus causes initiation of a locked interaction mode. The causation of initiation and the locked interaction mode may be similar as described regarding FIGURES 2A-2B and FIGURES 4A-4C.

At block 1004, the apparatus determines a pre-alarm event based, at least in part, on historical alarm event disablement information. In at least one example embodiment, the pre-alarm event is associated with an alarm event. In at least one example embodiment, the alarm event is a recurring alarm event. The determination, the pre-alarm event, the historical alarm event disablement information, the alarm event, and the recurring alarm event may be similar as described regarding FIGURES 2A-2B, FIGURE 3, FIGURES 4A-4C, and FIGURE 5.

At block 1006, the apparatus determines that the pre-alarm event has occurred. The determination and the occurrence of the pre-alarm event may be similar as described regarding FIGURES 4A-4C and FIGURE 5.

At block 1008, the apparatus causes actuation of a pre-alarm notification indicative of occurrence of the pre-alarm event. The causation of actuation and the pre-alarm notification may be similar as described regarding FIGURES 4A-4C and FIGURE 5.

At block 1010, the apparatus determines whether an indication of an alarm notification disablement input associated with the pre-alarm notification has been received. If the indication of the alarm notification disablement input associated with the pre-alarm notification has been received, flow proceeds to block 1018. If the indication of the alarm notification disablement input associated with the pre-alarm notification has failed to have been received, flow proceeds to block 1012. The determination, the receipt, and the alarm notification disablement input may be similar as described regarding FIGURES 4A-4C and FIGURE 5.

At block 1012, the apparatus determines that the alarm event has occurred. In this manner, the determination that the alarm event has occurred may be based, at least in part, on the determination that the indication of the alarm notification disablement input associated with the pre-alarm notification has failed to have been received. The determination may be similar as described regarding FIGURES 2A-2B, FIGURE 3, FIGURES 4A-4C, and FIGURE 5.

At block 1014, the apparatus causes actuation of an alarm notification indicative of the occurrence of the recurring alarm event. The causation of actuation and the alarm notification may be similar as described regarding FIGURES 2A-2B, FIGURE 3, FIGURES 4A-4C, and FIGURE 5.

At block 1016, the apparatus causes termination of the locked interaction mode. The causation of termination of the locked interaction mode may be similar as described regarding FIGURES 2A-2B and FIGURES 4A-4C.

At block 1018, the apparatus causes disablement of a next occurrence of the recurring alarm event based, at least in part, on the alarm notification disablement input. In at least one example embodiment, the disablement of the next occurrence of the recurring alarm event is performed such that an occurrence of the recurring alarm event that is subsequent to the next recurring alarm event is enabled. In this manner, the causation of disablement of the next occurrence of the recurring alarm event may be based, at least in part, on the determination that the indication of the alarm notification disablement input associated with the pre-alarm notification has been received. The causation of disablement, the next occurrence of the recurring alarm event, and the occurrence of the recurring alarm event that is subsequent to the next recurring alarm event may be similar as described regarding FIGURES 2A-2B, FIGURE 3, FIGURES 4A-4C, and FIGURE 5.

At block 1020, the apparatus determines that the recurring alarm event that is subsequent to the next recurring alarm event has occurred. The determination may be similar as described regarding FIGURES 2A-2B, FIGURE 3, FIGURES 4A-4C, and FIGURE 5.

At block 1022, the apparatus causes actuation of an alarm notification indicative of the occurrence of the recurring alarm event that is subsequent to the next recurring alarm event. The causation of actuation and the alarm notification may be similar as described regarding FIGURES 2A-2B, FIGURE 3, FIGURES 4A-4C, and FIGURE 5.

At block 1024, the apparatus causes termination of the locked interaction mode. The causation of termination of the locked interaction mode may be similar as described regarding FIGURES 2A-2B and FIGURES 4A-4C.

Embodiments of the invention may be implemented in software, hardware, application logic or a combination of software, hardware, and application logic. The software, application logic and/or hardware may reside on the apparatus, a separate device, or a plurality of separate devices. If desired, part of the software, application logic and/or hardware may reside on the apparatus, part of the software, application logic and/or hardware may reside on a separate device, and part of the software, application logic and/or hardware may reside on a plurality of separate devices. In an example embodiment, the application logic, software or an instruction set is maintained on any one of various conventional computer-readable media.

If desired, the different functions discussed herein may be performed in a different order and/or concurrently with each other. For example, block 1024 of FIGURE 10 may be performed BEFORE block 1018 of FIGURE 10. Furthermore, if desired, one or more of the above-described functions may be optional or may be combined. For example, block 904 of FIGURE 9 may be optional and/or combined with block 902 of FIGURE 9.

Although various aspects of embodiments are set out in the claims, the summary, and the description, other aspects of the embodiments comprise other combinations of features from other described embodiments. In this manner, the embodiments include the combinations explicitly set out in the claims, the summary, and the description, as well as any other suitable combinations of any suitable features.

It is also noted herein that while the above describes example embodiments, these descriptions should not be viewed in a limiting sense. Rather, there are variations and modifications which may be made without departing from the scope of the present disclosure. The above description describes some examples of embodiments of an invention, however, those of ordinary skill in the art will be aware of possible alternative structures and method features which offer equivalent functionality to the specific examples of such structures and features described herein and which, for the sake of brevity and clarity, have been omitted from the above description. Nonetheless, the above description should be read as implicitly including reference to such alternative structures and method features which provide equivalent functionality unless such alternative structures or method features are explicitly excluded in the above description of the embodiments of the invention.

## Claims

1. An apparatus (10), comprising:
at least one processor (11);
at least one memory (12) including computer program code, the memory and the computer program code configured to, working with the processor, cause the apparatus to perform at least the following:
determination that a pre-alarm event that is associated with a set alarm event has occurred based, at least in part, on historical set alarm event disablement information;
causation of actuation of a pre-alarm notification indicative of occurrence of the pre-alarm event;
receipt of an indication of a set alarm notification disablement input associated with the pre-alarm notification; and
causation of disablement of the set alarm event based, at least in part, on the set alarm notification disablement input.

2. The apparatus (10) of Claim 1, wherein the memory (12) includes computer program code configured to, working with the processor (11), cause the apparatus to perform causation of display of a set alarm notification disablement interface element, wherein the set alarm notification disablement input corresponds with the set alarm notification disablement interface element.

3. The apparatus (10) of Claim 2, wherein the causation of display of the set alarm notification disablement interface element is based, at least in part, on the determination that the pre-alarm event has occurred.

4. The apparatus (10) of any of Claims 1-3, wherein determination that the pre-alarm event has occurred comprises determination that circumstances that correspond with a criteria for the pre-alarm event have occurred.

5. The apparatus (10) of any of Claims 1-4, wherein the historical set alarm event disablement information is information indicative of one or more previous disablements of the set alarm event and/or a disablement time.

6. The apparatus (10) of any of Claims 1-5, wherein the memory (12) includes computer program code configured to, working with the processor (11), cause the apparatus to perform:
determination, prior to the determination of the pre-alarm event, that the set alarm event has occurred;
causation of an actuation of a set alarm notification indicative of the occurrence of the set alarm event;
receipt of information indicative of a prior set alarm notification disablement input associated with the set alarm notification;
causation of disablement of the set alarm event based, at least in part, on the prior set alarm notification disablement input; and
causation of storage of information indicative of the disablement of the set alarm event, wherein the historical set alarm event disablement information is based, at least in part, on the information indicative of the disablement of the set alarm event.

7. The apparatus (10) of any of Claims 1-6, wherein the pre-alarm notification is actuated in a locked interaction mode.

8. The apparatus (10) of any of Claims 1-7, wherein the apparatus comprises a display (14), and the actuation of the pre-alarm notification comprises rendering of a visual indication of the pre-alarm notification on the display.

9. A method comprising:
determining that a pre-alarm event that is associated with a set alarm event has occurred based, at least in part, on historical set alarm event disablement information (602, 702, 802, 914);
causing actuation of a pre-alarm notification indicative of occurrence of the pre-alarm event (606, 706, 806, 916);
receiving an indication of a set alarm notification disablement input associated with the pre-alarm notification (608, 808, 918); and
causing disablement of the set alarm event based, at least in part, on the set alarm notification disablement input (610, 810, 920).

10. The method of Claim 9, further comprising causing display of a set alarm notification disablement interface element, wherein the set alarm notification disablement input corresponds with the set alarm notification disablement interface element.

11. The method of Claim 10, wherein the causation of display of the set alarm notification disablement interface element is based, at least in part, on the determination that the pre-alarm event has occurred.

12. The method of any of Claims 9-11, wherein the determination that the pre-alarm event has occurred comprises determining that circumstances that correspond with a criteria for the pre-alarm event have occurred.

13. The method of any of Claims 9-12, wherein the historical set alarm event disablement information is information indicative of one or more previous disablements of the set alarm event and/or a disablement time.

14. The method of any of Claims 9-13, further comprising:
determining, prior to the determination of the pre-alarm event, that the set alarm event has occurred (902);
causing an actuation of a set alarm notification indicative of the occurrence of the set alarm event (904);
receiving information indicative of a prior set alarm notification disablement input associated with the set alarm notification (906);
causing disablement of the set alarm event based, at least in part, on the prior set alarm notification disablement input (908); and
causing storage of information indicative of the disablement of the set alarm event (910), wherein the historical set alarm event disablement information is based, at least in part, on the information indicative of the disablement of the set alarm event.

15. At least one computer-readable medium encoded with instructions that, when executed by a processor, perform the method of any of claims 9-14.

## Patentansprüche

1. Vorrichtung (10), umfassend:
mindestens einen Prozessor (11);
mindestens einen Speicher (12), der Computerprogrammcode enthält, wobei der Speicher und der Computerprogrammcode so konfiguriert sind, dass sie in Zusammenarbeit mit dem Prozessor die Vorrichtung veranlassen, mindestens das Folgende auszuführen:
Feststellen, dass ein Voralarmereignis, das einem festgelegten Alarmereignis zugeordnet ist, aufgetreten ist, mindestens teilweise basierend auf historischen festgelegten Alarmereignis-Deaktivierungsinformationen;
Veranlassen der Auslösung einer Voralarmbenachrichtigung, die das Auftreten des Voralarmereignisses anzeigt;
Empfangen einer Anzeige einer festgelegten Alarmbenachrichtigungs-Deaktivierungseingabe, die der Voralarmbenachrichtigung zugeordnet ist; und
Auslösen der Deaktivierung des festgelegten Alarmereignisses, mindestens teilweise basierend auf der festgelegten Alarmbenachrichtigungs-Deaktivierungseingabe.

2. Vorrichtung (10) nach Anspruch 1, wobei der Speicher (12) Computerprogrammcode enthält, der so konfiguriert ist, dass er in Zusammenarbeit mit dem Prozessor (11) die Vorrichtung veranlasst, das Auslösen einer Anzeige eines festgelegten Alarmbenachrichtigungs-Deaktivierungsschnittstellenelements durchzuführen, wobei die festgelegte Alarmbenachrichtigungs-Deaktivierungseingabe dem festgelegten Alarmbenachrichtigungs-Deaktivierungsschnittstellenelement entspricht.

3. Vorrichtung (10) nach Anspruch 2, wobei das Auslösen der Anzeige des festgelegten Alarmbenachrichtigungs-Deaktivierungsschnittstellenelements mindestens teilweise auf der Feststellung basiert, dass das Voralarmereignis aufgetreten ist.

4. Vorrichtung (10) nach einem der Ansprüche 1-3, wobei die Feststellung, dass das Voralarmereignis aufgetreten ist, die Feststellung umfasst, dass Umstände aufgetreten sind, die einem Kriterium für das Voralarmereignis entsprechen.

5. Vorrichtung (10) nach einem der Ansprüche 1-4, wobei die historischen festgelegten Alarmereignis-Deaktivierungsinformationen Informationen sind, die eine oder mehrere vorausgehende Deaktivierungen des festgelegten Alarmereignisses und/oder eine Deaktivierungszeit anzeigen.

6. Vorrichtung (10) nach einem der Ansprüche 1-5, wobei der Speicher (12) Computerprogrammcode enthält, der so konfiguriert ist, dass er in Zusammenarbeit mit dem Prozessor (11) die Vorrichtung veranlasst, Folgendes durchzuführen:
Feststellen, vor der Feststellung des Voralarmereignisses, dass das festgelegte Alarmereignis aufgetreten ist;
Veranlassen einer Auslösung einer festgelegten Voralarmbenachrichtigung, die das Auftreten des festgelegten Voralarmereignisses anzeigt;
Empfangen von Informationen einer vorausgehenden festgelegten Alarmbenachrichtigungs-Deaktivierungseingabe, die der festgelegten Voralarmbenachrichtigung zugeordnet ist;
Auslösen der Deaktivierung des festgelegten Alarmereignisses, mindestens teilweise basierend auf der vorausgehenden festgelegten Alarmbenachrichtigungs-Deaktivierungseingabe; und
Auslösen der Speicherung von Informationen, die die Deaktivierung des festgelegten Alarmereignisses anzeigen, wobei die historischen festgelegten Alarmereignis-Deaktivierungsinformationen mindestens teilweise auf den Informationen basieren, die die Deaktivierung des Alarmereignisses anzeigen.

7. Vorrichtung (10) nach einem der Ansprüche 1-6, wobei die Voralarmbenachrichtigung in einem gesperrten Interaktionsmodus ausgelöst wird.

8. Vorrichtung (10) nach einem der Ansprüche 1-7, wobei die Vorrichtung ein Display (14) umfasst, und das Auslösen der Voralarmbenachrichtigung das Wiedergeben einer optischen Anzeige der Voralarmbenachrichtigung auf dem Display umfasst.

9. Verfahren, umfassend:
Bestimmen, dass ein Voralarmereignis, dass einem festgelegten Alarmereignis zugeordnet ist, aufgetreten ist, mindestens teilweise basierend auf historischen festgelegten Alarmereignis-Deaktivierungsinformationen (602, 702, 802, 914);
Veranlassen der Auslösung einer Voralarmbenachrichtigung, die das Auftreten des Voralarmereignisses (606, 706, 806, 916) anzeigt;
Empfangen einer Anzeige einer festgelegten Alarmbenachrichtigungs-Deaktivierungseingabe, die der Voralarmbenachrichtigung (608, 808, 918) zugeordnet ist; und
Auslösen der Deaktivierung des festgelegten Alarmereignisses, mindestens teilweise basierend auf der festgelegten Alarmbenachrichtigungs-Deaktivierungseingabe (610, 810, 920).

10. Verfahren nach Anspruch 9, ferner umfassend das Auslösen der Anzeige eines festgelegten Alarmbenachrichtigungs-Deaktivierungsschnittstellenelements, wobei die festgelegte Alarmbenachrichtigungs-Deaktivierungseingabe dem festgelegten Alarmbenachrichtigungs-Deaktivierungsschnittstellenelement entspricht.

11. Verfahren nach Anspruch 10, wobei das Auslösen der Anzeige des festgelegten Alarmbenachrichtigungs-Deaktivierungsschnittstellenelements mindestens teilweise auf der Feststellung basiert, dass das Voralarmereignis aufgetreten ist.

12. Verfahren nach einem der Ansprüche 9-11, wobei die Feststellung, dass das Voralarmereignis aufgetreten ist, die Feststellung umfasst, dass Umstände aufgetreten sind, die einem Kriterium für das Voralarmereignis entsprechen.

13. Verfahren nach einem der Ansprüche 9-12, wobei die historischen festgelegten Alarmereignis-Deaktivierungsinformationen Informationen sind, die eine oder mehrere vorausgehende Deaktivierungen des festgelegten Alarmereignisses und/oder eine Deaktivierungszeit anzeigen.

14. Verfahren nach einem der Ansprüche 9-13, ferner umfassend:
Feststellen, vor der Feststellung des Voralarmereignisses, dass das festgelegte Alarmereignis aufgetreten ist (902);
Veranlassen einer Auslösung einer festgelegten Voralarmbenachrichtigung, die das Auftreten des festgelegten Voralarmereignisses anzeigt (904);
Empfangen von Informationen einer vorausgehenden festgelegten Alarmbenachrichtigungs-Deaktivierungseingabe, die der festgelegten Voralarmbenachrichtigung zugeordnet ist (906);
Auslösen der Deaktivierung des festgelegten Alarmereignisses, mindestens teilweise basierend auf der vorausgehenden festgelegten Alarmbenachrichtigungs-Deaktivierungseingabe (908); und
Auslösen der Speicherung von Informationen, die die Deaktivierung des festgelegten Alarmereignisses anzeigen (910), wobei die historischen festgelegten Alarmereignis-Deaktivierungsinformationen mindestens teilweise auf den Informationen basieren, die die Deaktivierung des Alarmereignisses anzeigen.

15. Mindestens ein computerlesbares Medium, das mit Anweisungen codiert ist, die, wenn sie von einem Prozessor ausgeführt werden, das Verfahren nach einem der Ansprüche 9-14 durchführen.

## Revendications

1. Appareil (10), comprenant :
au moins un processeur (11) ;
au moins une mémoire (12) comprenant un code de programme informatique, la mémoire et le code de programme informatique étant configurés pour, en travaillant avec le processeur, amener l'appareil à réaliser au moins les opérations suivantes :
la détermination qu'un événement de pré-alarme qui est associé à un événement d'alarme défini s'est produit sur la base, au moins en partie, des informations historiques de désactivation d'événement d'alarme défini ;
le fait de causer l'activation d'une notification de pré-alarme indicative de la survenance de l'événement de pré-alarme ;
la réception d'une indication d'une entrée de désactivation de notification d'alarme définie associée à la notification de pré-alarme ; et
le fait de causer la désactivation de l'événement d'alarme défini sur la base, au moins en partie, de l'entrée de désactivation de notification d'alarme définie.

2. Appareil (10) selon la revendication 1, la mémoire (12) comprenant un code de programme informatique configuré pour, en travaillant avec le processeur (11), amener l'appareil à réaliser le fait de causer l'affichage d'un élément d'interface de désactivation de notification d'alarme défini, l'entrée de désactivation de notification d'alarme définie correspondant à l'élément d'interface de désactivation de notification d'alarme défini.

3. Appareil (10) selon la revendication 2, le fait de causer l'affichage de l'élément d'interface de désactivation de notification d'alarme défini étant basé, au moins en partie, sur la détermination que l'événement de pré-alarme s'est produit.

4. Appareil (10) selon l'une quelconque des revendications 1 à 3, la détermination que l'événement de pré-alarme s'est produit comprenant la détermination que des circonstances qui correspondent à un critère pour l'événement de pré-alarme se sont produites.

5. Appareil (10) selon l'une quelconque des revendications 1 à 4, les informations historiques de désactivation d'événement d'alarme défini étant des informations indicatives d'une ou plusieurs précédentes désactivations de l'événement d'alarme défini et/ou d'un temps de désactivation.

6. Appareil (10) selon l'une quelconque des revendications 1 à 5, la mémoire (12) comprenant un code de programme informatique configuré pour, en travaillant avec le processeur (11), amener l'appareil à réaliser :
la détermination, antérieurement à la détermination de l'événement de pré-alarme, que l'événement d'alarme défini s'est produit ;
le fait de causer une activation d'une notification d'alarme définie indicative de la survenue de l'événement d'alarme défini ;
la réception d'informations indicatives d'une entrée de désactivation de notification d'alarme définie antérieurement associée à la notification d'alarme définie ;
le fait de causer la désactivation de l'événement d'alarme défini sur la base, au moins en partie, de l'entrée de désactivation de notification d'alarme définie antérieurement ; et
le fait de causer le stockage d'informations indicatives de la désactivation d'événement d'alarme défini, les informations historiques de désactivation de l'événement d'alarme défini étant basées, au moins en partie, sur les informations indicatives de la désactivation de l'événement d'alarme défini.

7. Appareil (10) selon l'une quelconque des revendications 1 à 6, la notification de pré-alarme étant activée dans un mode d'interaction verrouillé.

8. Appareil (10) selon l'une quelconque des revendications 1 à 7, l'appareil comprenant un affichage (14), et l'activation de la notification de pré-alarme comprenant le rendu d'une indication visuelle de la notification de pré-alarme sur l'affichage.

9. Procédé comprenant :
la détermination qu'un événement de pré-alarme qui est associé à un événement d'alarme défini s'est produit, sur la base au moins en partie, des informations historiques de désactivation d'événement d'alarme défini (602, 702, 802, 914) ;
le fait de causer l'activation d'une notification de pré-alarme indicative de la survenance de l'événement de pré-alarme (606, 706, 806, 916) ;
la réception d'une indication d'une entrée de désactivation de notification d'alarme définie associée à la notification de pré-alarme (608, 808, 918) ; et
le fait de causer la désactivation de l'événement d'alarme défini sur la base, au moins en partie, de l'entrée de désactivation de notification d'alarme définie (610, 810, 920).

10. Procédé selon la revendication 9, comprenant en outre le fait de causer l'affichage d'un élément d'interface de désactivation de notification d'alarme défini, l'entrée de désactivation de notification d'alarme défini correspondant à l'élément d'interface de désactivation de notification d'alarme défini.

11. Procédé selon la revendication 10, le fait de causer l'affichage de l'élément d'interface de désactivation de notification d'alarme défini étant basée, au moins en partie, sur la détermination que l'événement de pré-alarme s'est produit.

12. Procédé selon l'une quelconque des revendications 9 à 11, la détermination que l'événement de pré-alarme s'est produit comprenant la détermination que des circonstances qui correspondent à un critère pour l'événement de pré-alarme se sont produites.

13. Procédé selon l'une quelconque des revendications 9 à 12, les informations historiques de désactivation d'événement d'alarme défini étant des informations indicatives d'une ou plusieurs désactivations précédentes de l'événement d'alarme défini et/ou d'un temps de désactivation.

14. Procédé selon l'une quelconque des revendications 9 à 13, comprenant en outre :
la détermination, antérieurement à la détermination de l'événement de pré-alarme, que l'événement d'alarme défini s'est produit (902) ;
le fait de causer l'activation d'une notification d'alarme définie indicative de la survenue de l'événement d'alarme défini (904) ;
la réception d'informations indicatives d'une entrée de désactivation de notification d'alarme définie antérieurement associée à la notification d'alarme définie (906) ;
le fait de causer la désactivation de l'événement d'alarme défini sur la base, au moins en partie, de l'entrée de désactivation de notification d'alarme défini antérieurement (908) ; et
le fait de causer le stockage d'informations indicatives de la désactivation de l'événement d'alarme défini (910), les informations historiques de désactivation d'événement d'alarme défini étant basées, au moins en partie, sur les informations indicatives de la désactivation de l'événement d'alarme défini.

15. Au moins un support lisible par ordinateur codé avec des instructions qui, lorsqu'elles sont exécutées par un processeur, réalisent le procédé selon l'une quelconque des revendications 9 à 14.
